(19) Europäisches Patentamt
European Patent Office
Office européen des brevets

(11) Veröffentlichungsnummer: **0 013 915**
**B1**

(12) # EUROPÄISCHE PATENTSCHRIFT

(45) Veröffentlichungstag der Patentschrift: **13.04.83**

(51) Int. Cl.³: **C 04 B 15/06,** C 09 K 3/32

(21) Anmeldenummer: **80100129.8**

(22) Anmeldetag: **11.01.80**

(54) **Verwendung von, gegebenenfalls zerkleinerten, Leichtbauplatten auf der Grundlage von faserverstärkten Calciumsilikatmassen.**

(30) Priorität: **19.01.79 DE 2902109**

(43) Veröffentlichungstag der Anmeldung: **06.08.80 Patentblatt 80/16**

(45) Bekanntmachung des Hinweises auf die Patenterteilung: **13.04.83 Patentblatt 83/15**

(84) Benannte Vertragsstaaten: **AT BE CH FR GB IT LU NL SE**

(56) Entgegenhaltungen:
**EP-A-0 007 585**
**DD-A-121 505**
**DE-A-2 548 744**
**DE-B-1 634 014**
**DE-B-1 811 131**
**DE-C-1 012 857**
**DE-C-1 072 232**
**US-A-3 660 021**

(73) Patentinhaber: **MARS INCORPORATED, Westgate Park 1651 Old Meadow Road, McLean Virginia 22102 (US)**

(72) Erfinder: **Krämer, Walter, Uhlenkamp 1, D-3040 Soltau-Friedrichseck (DE)**
Erfinder: **Follmann, Rainer, Dr. Dipl.-Chem., Haddenhauser Dorfstrasse 6, D-4950 Minden (DE)**

(74) Vertreter: **Weickmann, Heinrich, Dipl.-Ing., Patentanwälte Dipl.-Ing. H. Weickmann Dipl.-Phys.Dr. K. Fincke Dipl.-Ing. F.A. Weickmann Dipl.-Chem. B. Huber Dr.-Ing. H. Liska Möhlstrasse 22, D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 013 915 B1

BUNDESDRUCKEREI BERLIN

# Verwendung von, gegebenenfalls zerkleinerten, Leichtbauplatten auf der Grundlage von faserverstärkten Calciumsilikatmassen

Die Erfindung betrifft die Verwendung von weiter unten festgelegten, gegebenenfalls zerkleinerten, Leichtbauplatten auf der Grundlage von faserverstärkten Calciumsilikatmassen zur Ab- beziehungsweise Adsorption.

Bei den für den Verwendungszweck der Flüssigkeitsabsorption beziehungsweise -adsorption eingesetzten bekannten Produkten handelt es sich im wesentlichen um Naturprodukte mineralischen oder organischen Ursprungs, wie Bimsstein, Tonmineralien, beispielsweise Sepiolithe, Holzmehle und Kieselgur, die auf Grund ihrer natürlichen Porosität hydrophile und/oder lipophile Eigenschaften besitzen. Organische Produkte haben jedoch den Nachteil von unerwünschten Nebenwirkungen bei ihrer Verwendung, wie ihre Brennbarkeit. Andererseits neigen mineralische Produkte, wie Tonmineralien, durch Aufnahme von Flüssigkeiten, hauptsächlich nach Erreichen der Saugkapazität, in der Regel zum Quellen und damit zu einer plastischen Konsistenz (Erweichen) sowie zum Verklumpen. Noch ausgeprägter ist dies bei Kieselgur, welche stark klebrig, schmierig und sogar breiig wird. Diese nachteiligen Eigenschaften führen zwangsläufig zu Schwierigkeiten bei der Handhabung derartiger Produkte. Bimsstein hat den Nachteil der zu geringen Saugfähigkeit. Daher wird er mit Sepiolithen vermischt verwendet, was wiederum die genannten schwerwiegenden Nachteile der letzteren mit sich bringt.

Auch ist aus der deutschen Offenlegungsschrift 2 810 140 ein Verfahren zur Reinigung von Medien oder Oberflächen, die Fettstoffe enthalten, durch Absorption dieser Materialien mit Hilfe einer Absorptionsmasse, welche Lederteilchen oder-fasern und gegebenenfalls ein mineralisches Pulver, nämlich Calciumcarbonat, Kaolinit, Bentonit, Montmorillonit, Talk oder andere Silikate als Zusatz enthält, bekannt. Zwar haben die in dieser Druckschrift verwendeten Absorptionsmassen eine hohe oleophile Saugkapazität, wegen des ausschließlichen oder überwiegenden Gehaltes an organischen Materialien sind sie jedoch brennbar. Hinzukommt noch, daß es ihnen an der »Druckfestigkeit« mangelt, das heißt, daß nach Erschöpfung ihrer oleophilen Saugkapazität das Öl herausgequetscht wird. Darüber hinaus werden die in der genannten Druckschrift verwendeten Absorptionsmassen durch Aufnahme von Flüssigkeiten schmierig und quellend sowie stets verklumpend mit plastischer Konsistenz, und zwar nicht nur dann, wenn sie Tonmineralien, wie Kaolinit, Bentonit beziehungsweise Montmorillonit, enthalten, sondern auch in den sonstigen Ausführungsformen, also auch im Falle, daß sie Calciumcarbonat, Talk oder andere natürliche Silikate enthalten.

Da es sich bei den bekannten Ab- und Adsorptionsmitteln vorzugsweise um Naturprodukte handelt, haben sie auch noch den Nachteil, daß sie in der Regel einer größeren Variationsbreite hinsichtlich ihrer chemischen und mineralischen Zusammensetzung unterliegen und sich in der Art und Menge ihrer Verunreinigungen unterscheiden. Durch Abmischen beispielsweise mit Sand wird eine Kompensation dieser bekannten Nachteile angestrebt, was jedoch zwangsläufig infolge einer Konzentrationsverminderung der wirksamen Bestandteile zu einer verminderten Saugfähigkeit der Produkte führt, ohne die genannten nachteiligen Eigenschaften effektiv aufzuheben.

Ferner ist aus der österreichischen Patentschrift 330 057 ein Verfahren zur Herstellung von Formkörpern, insbesondere Leichtbauplatten, auf der Grundlage von durch Bindemittel gebundenen Gerüstmaterialien bekannt, bei welchem als Gerüstmaterialien unter anderen auch geblähte Silikatgesteine, wie Perlit, geblähte Glimmer, wie Vermiculit, oder geblähtes Glas verwendet werden können und als bindende Zusatzstoffe natürliche oder künstliche Puzzolane, feinkörnige Hochofenschlacken, Natriumfluorid, Natriumhydroxid, Soda, Flußsäure, Kryolith, Aluminate, Aluminosulfate, Borate, Chloride, Phosphate oder Nitrate des Natriums oder Kaliums, Silicofluoride des Natriums, Kaliums oder Magnesiums, Natriumbicarbonat oder Wasserglas eingesetzt werden. Von der Verwendung der erhaltenen Produkte als Absorptionsmaterial ist keine Rede. Sie werden vorzugsweise unter Verwendung von Holzspänen als Gerüstmaterialien hergestellt, in welchem Falle ihre Eigenschaften etwa mit denen von Holzspanplatten vergleichbar sind.

Weiterhin ist aus der britischen Patentschrift 1 411 232 ein zur Anwendung bei Temperaturen bis 700°C geeigneter Wärmeisoliergegenstand aus einem verstärkten Calciumsilikathydratelement, welcher durch Umsetzen einer Mischung von gelöschte m Kalk und siliciumhaltigem Material in Gegenwart von Celluloseverstärkungsfasern erhalten worden ist, beschrieben. Aus dem Example I auf Seite 2, Zeile 43 bis 67 der genannten Druckschrift geht hervor, daß zur Herstellung des betreffenden Materiales die Cellulosefasern mit dem siliciumhaltigen Material, beispielsweise Kieselgur, vermischt werden und diese Mischung auf etwa 93°C vorerhitzt wird und zusammen mit einer auf einer Temperatur von etwa 66°C befindlichen Calciumhydroxid enthaltenden wäßrigen Mischung zu einer ausreichenden Menge von auf etwa 93°C vorerhitztem Wasser zugegeben wird, worauf die erhaltene Aufschlämmung etwa 1 Stunde lang unter ständigem langsamem Rühren auf einer Temperatur von 88 bis 93°C gehalten wird. Danach soll ein Gelieren eingetreten sein. Diese Aufschlämmung wird dann mit Hilfe einer Filterpresse entwässert und die geformten Stücke werden in einem Hochdruckdampfautoklaven gehärtet, worauf noch ein Trocknen erfolgt. Von einer Verwendung als Absorptionsmittel ist keine Rede.

Außerdem sind aus der deutschen Offenlegungsschrift 2 728 581 Leichtfasergipsplatten, die

gegebenenfalls als Leichtzuschlag Perlit oder Vermiculit in einer Menge von 1 bis 3 Gew.-% enthalten, bekannt. Von einer Verwendung derselben als Absorptionsmittel ist auch keine Rede. Sie scheidet auch grundsätzlich aus, da Gips eine bestimmte Löslichkeit hat und aus ihm mit Wasser Sulfationen freigesetzt werden.

Ferner sind aus der deutschen Offenlegungsschrift 2 633 246 zur Fixierung von biologischen Makromolekülen bestimmte Materialien von kationischem Charakter bekannt, welche aus einem porösen mineralischen Träger nämlich einem mineralischen Oxid oder einem synthetischen oder natürlichen Derivat eines solchen, wie einem Silikat, dessen Oberfläche direkt direkt mit einem aminierten Polysaccharidpolymer überzogen ist. Von einer Verwendung von Calciumsilikat oder gar synthetischem Calciumsilikat als Absorptionsmittel ist jedoch keine Rede. Es handelt sich bei den Materialien der genannten Druckschrift, auch soweit überhaupt Silikate angesprochen werden, nach der dort gegebenen Definition und ihre Funktion um mineralische Oxide, die lediglich als Träger für die aminierten Polysaccharidpolymere, mit welchen sie zu überziehen sind, dienen. Von den verschiedenen Formen des Siliciumdioxides können aber nur die amorphen, nämlich Kieselgut (Diatomeenerde), gefällte Kieselsäure und pyrogene Kieselsäure, Absorptionseigenschaften haben. Diese haben jedoch, wie bereits weiter oben dargelegt wurde, den großen Nachteil, daß sie durch Aufnahme von Flüssigkeiten quellen und klebrig, schmierig und sogar breiig werden sowie verklumpen.

Weiterhin ist aus der deutschen Patentschrift 1 012 857 ein Verfahren zur Herstellung von porösen Produkten niedriger Dichte in dem System $CaO-SiO_2-H_2O$ aus wäßrigen Suspensionen von feinzerteiltem reaktionsfähigem Kalk und Siliciumdioxid im Molverhältnis des ersteren zum letzteren von etwa 1 : 1 bekannt, bei welchem der wäßrige Schlamm von reaktionsfähigem feinzerteiltem Kalk und Siliciumdioxid durch Zusatz von wasserhaltigem Calciumsilikat von latten- oder schuppenähnlicher Kristallform und fast kolloidaler Größe, welches auch bereits reagiertes synthetisches Calciumsilikat von einem Molverhältnis von CaO zu $SiO_2$ von 1 : 1 sein kann, als Suspendierungsmittel stabilisiert wird, wobei das Volumverhältnis von Flüssigkeit zu Festanteilen in der Suspension auf mehr als 1 : 1 bemessen wird, und die suspendierten reaktionsfähigen Feststoffe Kalk und Siliciumdioxid in der Weise miteinander in Reaktion gebracht werden, daß die Suspension Temperaturen über 175°C und Drücken über 9 ata unterworfen wird. Eine Vorreaktion ist nicht vorgesehen, die Suspension in heißem Wasser von 66 bis 79°C wird vielmehr nach dem vollständigen Durchmischen dem Autoklavenhärten bei Temperaturen über 175°C und Drücken über 9 ata unterworfen. So kann aber ein langsamer Gelaufbau mit den daraus sich ergebenden vorteilhaften Produkteigenschaften nicht vor sich gehen. Auch ist von der Verwendung von Faserstoffen keine Rede. Die Aufgabe des Verfahrens dieser Druckschrift ist nicht die Herstellung von plattenförmigen Formkörpern in einer Dicke ab 10 mm, welche als Ab- beziehungsweise Adsorptionsmittel verwendbar sind, und kann es auch nicht sein. Unter vollständigem Durchmischen des angegebenen Ansatzes gemäß der genannten Druckschrift ist die Mindestzeiteinheit, die zur Herstellung einer homogenen Mischung erforderlich ist, zu verstehen. Dabei wird, um in einer solchen Mischung zum Beispiel Entmischungsvorgängen (Sedimentation) entgegenzuwirken, das Mischwasser auf 66 bis 79°C erhitzt und so der Ablöschvorgang des gebrannten Kalkes ($CaO+H_2O=Ca(OH)_2+Q$ [exotherme Wärmeenergie]) angeregt und beschleunigt; dieser Vorgang führt zu einer Verdickung des Mörtelgemisches und damit zur Unterdrückung der Sedimentation. Unter diesen Bedingungen beträgt die zur Erzielung einer vollständigen Durchmischung erforderliche Zeit 3 bis 5 Minuten. Auch ist in dieser Druckschrift keine Rede von der Verwendung von deren Produkten als Ab- beziehungsweise Adsorptionsmittel.

Außerdem ist in der deutschen Patentschrift 1 072 232 ein Verfahren zur Herstellung von feinteiligen, hauptsächlich aus Calciumsilikat oder Calciumsilikat und Kieselsäure bestehenden Massen mit einem Schüttgewicht von höchstens etwa 130 g/l durch Umsetzung eines Kieselsäuresoles oder Kieselsäurehydrogeles mit Calciumhydroxid in wäßrigem Medium drucklos, vorzugsweise unter Erhöhung der Temperatur des Reaktionsgemisches auf etwa 70 bis 100°C, bei einem Molverhältnis von 1 Mol $Ca(OH)_2$ zu 2 bis 3 Mol $SiO_2$ sowie Trocknen und Mahlen des Umsetzungsproduktes beschrieben. Von einem Zusatz eines synthetisch hergestellten Calciumsilikatgranulates beziehungsweise -pulvers ist keine Rede und es erfolgt keine Autoklavenhärtung. In dieser Druckschrift ist auch die Verwendung der nach ihr hergestellten Produkte als Adsorptionsmittel erwähnt. Die Produkte des in dieser Druckschrift beschriebenen Verfahrens sind aber, insbesondere bei der Durchführung der Umsetzung bei den bevorzugten Temperaturen von 70 bis 100°C C—S—H-Phasen mit sehr hohem Kristallwasseranteil von 12 bis 20 Mol. Diesem Umstand zufolge haben die erzielten Calciumsilikathydrats eine außerordentlich geringe Festigkeit und unterliegen einer sehr hohen Nachschwindung. Selbst die sehr geringe Eigenfestigkeit wird bei Sättigung mit Wasser nahezu aufgehoben, wobei eine schmierige Masse anfällt, was bei der Anwendung als Adsorptionsmittel sehr nachteilig ist.

Ferner ist aus der US-Patentschrift 3 660 021 ein Verfahren zur Herstellung von feinverteiltem Calciumsilikat durch Umsetzen von Calciumsulfat mit Natriumsilikat in Mengen unter Bildung einer Zusammensetzung mit einem Gehalt an etwa 0,7 bis 4,0 Mol $SiO_2$ je Mol CaO bekannt. Zwar ist in dieser Druckschrift allgemein angegeben, daß die Ölabsorption 100 bis 250 beträgt, der höchste Wert der Ölabsorption von Produkten der Beispiele ist jedoch nur 165 (im Beispiel 2 in Spalte 3, Zeile 12). Der zeitliche Verlauf der Absorption beziehungsweise die Zeit bis zur Erreichung der höchsten

Saugkapazität ist nicht angegeben. Diese ist nämlich bei solchen Produkten verhältnismäßig lang. Auch geht aus der Tatsache, daß in der US-Patentschrift 3 660 021 als Prüfverfahren zur Bestimmung der Ölabsorption das nach ASTM-D 281-31, welches auf die Ermittlung der Ölabsorption von Pigmenten ausgerichtet ist, verwendet wurde, hervor, daß es sich bei deren Produkten um solche, welche den Pigmenten zuzuordnen sind, handelt.

Auch ist aus der DDR-Patentschrift 121 505 ein Verfahren zur Herstellung von thermisch gehärteten festen Formkörpern aus Calciumoxid enthaltenden Materialien, Alkalihydroxiden und Siliciumdioxid enthaltenden Materialien, wobei dem Reaktionsgemisch oberflächenaktive Stoffe, wie Stearate oder Silicone, zugesetzt werden können, um durch die letzteren die Ausblühungen zu verringern, bekannt. In dieser Druckschrift ist aber keine Rede von der Verwendung der nach ihr hergestellten Produkte als Ab- beziehungsweise Adsorptionsmittel. Eine solche Anwendung wäre übrigens wegen der hohen Rohdichten von über 1700 kg/m³ (=1,7 g/cm³) allenfalls nur mit geringer Wirkung möglich.

Auch ist aus der deutschen Auslegeschrift 1 811 131 ein saugfähiges Streumittel zum Aufsaugen von ausgelaufenem Öl und Benzin aus einer körnigen und geblähten mineralischen Masse, bei der die Bestandteile an $SiO_2$, $Al_2O_3$ und CaO überwiegen, und zwar speziell aus gemahlener Hochofenschlakke, von welcher zweckmäßig die ausgesiebten Korngrößen von 5 bis 10 mm verwendet werden, und Tonstaub, wobei dieses Streumittel ein spezifisches Gewicht von etwa 900 bis 1000 kg/m³ aufweist, bekannt. Die Porosität und Saugkapazität der Produkte dieser Druckschrift läßt sich wie folgt errechnen:

$$\frac{\text{Rohdichte des Streumittels}}{\text{Rohdichte von Schlacke/Ton}} = \frac{1{,}0\ \text{kg/l}}{2{,}7\ \text{kg/l}} = 0{,}37 = \text{Gefügeauflockerung.}$$

Damit ist das Porenvolumen 100−37=63%. Unter der Annahme, daß für das theoretische Porenvolumen von 63% eine vollwertige Saugfähigkeit besteht, wäre demnach die höchste Saugkapazität 63 Gew.-%. Es ist jedoch davon auszugehen, daß insbesondere bei der Hochofenschlacke eine glasige Struktur besteht und deshalb zwangsläufig das Saugvermögen dieses Streumittels gemindert ist. Unter praktischen Bedingungen ist demnach das Saugvermögen dieses Streumittels mit höchstens etwa 50 Gew.-% anzusetzen. Das Streumittel der deutschen Offenlegungsschrift 1 811 131 wird nicht mit Hydrophobierungsmitteln durchsetzt beziehungsweise behandelt. Demzufolge muß dieses Streumittel beim Einsatz zur Beseitigung von Öl auf Straßen gleichzeitig auch Wasser absorbieren, sofern zum Zeitpunkt des Einsatzes dieses Streumittels die Straßen naß sind.

Weiterhin ist aus der deutschen Auslegeschrift 1 634 014 ein Verfahren zur Beseitigung von auf Wasser schwimmendem Öl durch Zugabe von spezifisch schweren Feststoffteilchen mit hydrophobierter Oberfläche und einem spezifischen Gewicht über 1,5 g/cm³, vorzugsweise 2 bis 4 g/cm³ bekannt, die das Öl binden und mit ihm absinken, wobei Feststoffteilchen, die durch Carbonsäureamidbildung auf ihrer Oberfläche hydrophobiert sind, verwendet werden. Als Beispiele für Feststoffe sind mineralische Festoffe, wie Steinmehle, Sande, Tonminerale, Eisenerze, Rotschlamm, LD-Schlacke, Eisen- und Metallhüttenschlacke und Lavaschlacke, sowie ferner Kohlenstaub und Naturasphaltmehl erwähnt. Von der Verwendung von Calciumsilikaten ist keine Rede. Als Hydrophobiermittel werden carbonsaure Salze beziehungsweise Carbonsäuren und mehrwertige Amine, wie Pentaäthylenhexamin, verwendet und die Amidbildung erfolgt auf der Oberfläche der Feststoffteilchen. Diese Druckschrift enthält keine Angaben über die Saugbeziehungsweise Absorptionskapazität und Absorptionsgeschwindigkeit. Es kommt in ihr offensichtlich darauf an, das Absinken der spezifisch schweren Feststoffteilchen auf Grund der Schwerkraft durch eine Hydrophobierung zu verlangsamen. Aber auch hierzu fehlt jedwede zeitliche Bewertung. Diese Hydrophobierung ist aber jedenfall jedenfalls nicht ausreichend, um etwa nach Belegung der Feststoffteilchen mit Öl diese abzuschöpfen. Vielmehr sinken diese Feststoffteilchen ab.

Schließlich ist aus der deutschen Offenlegungsschrift 2 548 744 ein saugfähiges Streumittel, vorzugsweise zum Beseitigen von Ölspuren oder Öllachen auf nicht saugfähigem festem Untergrund, welches durch Pulverisieren von Eternit hergestellt worden ist, bekannt. Solche Produkte haben in der Regel eine Rohdichte über 1000 kg/m³, vorzugsweise 1500 kg/m³. Demzufolge ist ihre Saugkapazität niedrig. Zudem sind solche Eternitpulver auf Grund der Gegenwart der Asbestfasern toxisch bedenklich.

Der Erfindung liegt die Aufgabe zugrunde, unter Behebung der Nachteile des Standes der Technik die Verwendung von neuen Produkten von anorganischem Charakter mit niedriger Rohdichte als Ab- beziehungsweise Adsorptionsmittel für Flüssigkeiten, Dämpfe und Gase mit besserer Saugfähigkeit, und zwar beschleunigtem Aufsaugvermögen bei besserer Saugkapazität (Speichervolumen) zu schaffen, welche nicht quellend, nicht klebend und nicht schmierend sind, mit Harnsäure keine Geruchsbildung ergeben, sondern im Gegenteil geruchbindend und ferner bakterizid sowie nicht staubend und nicht färbend sind.

Das Obige wurde überraschenderweise durch die Erfindung gelöst.

Gegenstand der nicht vorveröffentlichten europäischen Patentanmeldung 79 102 550.5 (nachveröffentlicht unter der Nr. 7 585) der Anmelderin, in welcher keine Rede von einer Verwendung zur Ab-

beziehungsweise Adsorption ist, ist ein Verfahren zur Herstellung von feuerbeständigen maßgenauen Leichtbauplatten mit einer Rohdichte von etwa 160 kg/m³ bis 800 kg/m³ auf der Grundlage von faserverstärkten Calciumsilikatmassen beschrieben, welches durch Umsetzen von amorphem und kristallinem Siliciumdioxid beziehungsweise diese enthaltenden Materialien mit Calciumoxid beziehungsweise dieses enthaltenden Materialien in einem Molverhältnis von CaO zu $SiO_2$ von 0,8 : 1 bis 1,1 : 1 unter Einarbeiten von toxikologisch unbedenklichen Faserstoffen in Gegenwart von Wasser und unter Entwässern erfolgendes Formen und Autoklavenhärten durchgeführt wird mit der weiteren Maßgabe, daß als weiterer Zusatz ein synthetisch hergestelltes Calciumsilikatgranulat beziehungsweise -pulver mit einem Molverhältnis von CaO zu $SiO_2$ von 0,8 : 1 bis 1,1 : 1 verwendet und die Umsetzung vor dem Formen (Vorreaktion) ohne äußere Wärmeanwendung durchgeführt wird.

Es wurde nun überraschenderweise festgestellt, daß die so erhaltenen, gegebenenfalls zerkleinerten, Produkte mit überlegenem Ergebnis als Ab- beziehungsweise Adsorptionsmittel für Flüssigkeiten, Dämpfe und Gase verwendet werden können.

Gegenstand der Erfindung ist daher die Verwendung von feuerbeständigen maßgenauen Leichtbauplatten mit einer Rohdichte von etwa 160 kg/m³ bis 800 kg/m³ auf der Grundlage von faserverstärkten Calciumsilikatmassen oder genauer Calciumsilikathydratmassen, welche durch Umsetzen von amorphem und kristallinem Siliciumdioxid beziehungsweise die enthaltenden Materialien mit Calciumoxid beziehungsweise dieses enthaltenden Materialien in einem Molverhältnis vo CaO zu $SiO_2$ von 0,8 : 1 bis 1,1 : 1 unter Einarbeiten von toxikologisch unbedenklichen Faserstoffen in Gegenwart von Wasser und unter Entwässern erfolgendes Formen und Autoklavenhärten mit der weiteren Maßgabe, daß als weiterer Zusatz ein synthetisch hergestelltes Calciumsilikatgranulat beziehungsweise -pulver mit einem Molverhältnis von CaO zu $SiO_2$ von 0,8 : 1 bis 1,1 : 1 verwendet und die Umsetzung zum langsamen Aufbau einer Gelstruktur vor dem Formen (Vorreaktion) ohne äußere Wärmeanwendung durchgeführt worden ist, erhalten worden sind, gegebenenfalls in zerkleinerter und gegebenenfalls klassierter Form, als Ab- beziehungsweise Adsorptionsmittel für Flüssigkeiten, Dämpfe und Gase.

Spezielle vom Verfahren der deutschen Offenlegungsschrift 2 810 140 unterscheidet sich die erfindungsgemäße Verwendung darin, daß nach der letzteren ein synthetisches Calciumsilikat, und zwar noch dazu ein nach den erfindungsgemäßen Festlegungen hergestelltes eingesetzt wird, während nach der genannten Druckschrift die Verwendung allenfalls von natürlichen Silikaten vorgesehen ist. Noch dazu ist das erfindungsgemäß verwendete Material auf der Grundlage von Calciumsilikatmassen, der Hauptbestandteil ist also Calciumsilikat und der Zusatz die Fasern, während umgekehrt nach der genannten Druckschrift die Lederteilchen beziehungsweise -fasern der einzige Bestandteil oder der Hauptbestandteil sind und die mineralischen Pulver nur einen Zusatz darstellen. Auch werden erfindungsgemäß, gegebenenfalls zerkleinerte, Leichtbauplatten verwendet, während es sich bei den nach der genannten Druckschrift verwendeten Produkten nicht um, gegebenenfalls zerkleinerte, Platten handelt. Die erfindungsgemäße Verwendung bringt gegenüber der genannten Druckschrift den großen Vorteil mit sich, daß die nach ihr eingesetzten Materialien nicht brennbar und ferner »druckfest« sind, wobei nach Erschöpfung der oleophilen Saugkapazität unter Druckbelastung das absorbierte beziehungsweise absorbierte Öl im plattenförmigen beziehungsweise zerkleinerten Produkt verbleibt und nicht herausgequetscht wird. Das letztere ist von entscheidender Bedeutung insbesondere auch im Zusammenhang mit dem Transport beziehungsweise der Lagerung der mit Öl durchsetzten beziehungsweise gesättigten Produkte. Ferner heben sich die erfindungsgemäß verwendeten synthetischen Calciumsilikatprodukte von den Absorptionsmassen der genannten Druckschrift darin vorteilhaft ab, daß sie auch durch Aufnahme von Flüssigkeiten nicht zum Schmierigwerden und Quellen sowie Verklumpen neigen. Zusammenfassend liegt der überraschende technische Fortschritt der Erfindung darin, daß es zum ersten Mal mit Materialien auf der Grundlage von anorganischen Materialien gelungen ist, die hohen Saugkapazitäten in Bezug auf Öl um 200 Gew.-% zu erreichen.

Es war auch weder bekannt, noch wegen ihrer Art und Zusammensetzung für den Fachmann naheliegend, Leichtbauplatten, wie die aus der österreichischen Patentschrift 330 057 bekannten, als Absorptionsmaterial zu verwenden. Dabei weisen die in der genannten Druckschrift angegebenen Gerüstmaterialien, die eine glasige Struktur haben, nicht die ausgeprägte Mikroporenstruktur der erfindungsgemäß verwendeten synthetischen Calciumsilikatprodukte auf und sind so mit diesen weder physikalisch noch chemisch vergleichbar. Aus diesem Grunde ist eine Verwendung der ersteren als Absorptionsmittel nicht bekannt, vielmehr wurden sie in der genannten Druckschrift offensichtlich zur Verminderung der Rohdichte verwendet. Auch die in der genannten Druckschrift erwähnten bindenden Zusatzstoffe wirken nicht im Sinne einer Absorption. Sie kann auch nicht durch die genannten Gerüstmaterialien in den Leichtbauplatten von der Art der nach der genannten Druckschrift hergestellten begünstigt werden.

Analog wurden Calciumsilikatplatten mit Wärmeisolierungseigenschaften von der in der britischen Patentschrift 1 411 232 beschriebenen Art, obwohl sie seit vielen Jahren bekannt sind bisher nicht als Absorptionsmaterial eingesetzt. Dies war auch nicht naheliegend, da nach den bisherigen Erfahrungen der Fachmann annehmen mußte, daß ein Material mit besonderer Absorptionsfähigkeit, beispielsweise in Bezug auf Wasser, eine verminderte Wärmeisolierung habe, bei den

Leichtbauplatten der genannten Druckschrift aber gerade eine gute Wärmeisolierung angestrebt wird.

Gegenüber den in der deutschen Offenlegungsschrift 2 633 246 verwendeten Materialien bringen die erfindungsgemäß verwendeten synthetischen Calciumsilikatprodukte den überraschenden technischen Fortschritt mit sich, daß sie nicht quellen, nicht klebrig, schmierig beziehungsweise breiig werden und nicht verklumpen. Die erfindungsgemäß verwendeten synthetischen Calciumsilikatprodukte, die mit den in der deutschen Offenlegungsschrift 2 633 246 als Trägermaterialien verwendeten Oxiden nichts zu tun haben, sind Kristallisationsprodukte, die primär nicht hygroskopisch sind. Die ausgeprägte Absorptionskraft wird hierbei aber durch die mikroporige Struktur des Stoffgefüges erzielt. Diese wiederum ergibt sich aus den Vorgängen der periodischen Wasseranlagerung und späteren Austrocknung. Wesentlicher Charakter hierbei ist wie bereits dargelegt das stabile Materialverhalten.

Die erfindungsgemäß verwendeten Leichtbauplatten sind auch von den Produkten des Verfahrens der deutschen Patentschrift 1 012 857 grundlegend verschieden, wie es sich aus der grundlegenden Verschiedenheit der Verfahren zu ihrer Herstellung ergibt. Im Gegensatz zu den Produkten des Verfahrens der genannten Druckschrift handelt es sich bei den erfindungsgemäß verwendeten Produkten um plattenförmige Formkörper mit niedriger Rohdichte (Leichtbauplatten) und überraschend hoher Ab- beziehungsweise Absorptionsfähigkeit, wobei solche mit einer Dicke ab 10 mm möglich sind, was mit dem Verfahren der deutschen Patentschrift 1 012 857 nicht möglich ist. So unterscheidet sich das Verfahren zur Herstellung der erfindungsgemäß verwendeten Leichtbauplatten von dem der genannten Druckschrift grundlegend darin, daß nach dem ersteren im Gegensatz zum letzteren eine Vorreaktion von mindestens 5 Stunden ohne äußere Wärmeanwendung durchgeführt wird. Hierzu ist zu bemerken, daß das Durchmischen in der genannten Druckschrift nichts mit der Vorreaktion des Verfahrens zur Herstellung der erfindungsgemäß verwendeten Leichtbauplatten zu tun hat. Das Durchmischen, welches auch beim Verfahren zur Herstellung der erfindungsgemäß verwendeten Leichtbauplatten durchgeführt werden kann, erfolgt während einer Mischzeit von 3 bis 5 Minuten außerhalb des Reaktionsbehälters, zweckmäßig in einem Intensivmischer. Diese Zeit ist zu kurz für eine Reaktion oder gar eine zur Ausbildung der optimalen Gelstruktur. Demgegenüber wird durch die beim Verfahren zur Herstellung der erfindungsgemäß verwendeten Leichtbauplatten durchgeführte Vorreaktion von mindestens 5 Stunden ohne äußere Wärmeanwendung in Gegenwart eines synthetisch hergestellten Calciumsilikatgranulates beziehungsweise -pulvers ein langsamer Aufbau der Gelstruktur bei unbegrenzter Beständigkeit und damit Zwischenlagerungsmöglichkeit mit den daraus sich ergebenden vorteilhaften Materialeigenschaften der erhaltenen Produkte erzielt.

Durch die oben nachgewiesene grundlegende Verschiedenheit der erfindungsgemäß verwendeten Leichtbauplatten und der Produkte der deutschen Patentschrift 1 012 857 und dadurch, daß in der letzteren keine Rede von der Verwendung von deren Produkten als Ab- beziehungsweise Adsorptionsmitteln ist, lenkt diese Druckschrift von der erfindungsgemäßen Verwendung ab. Auch daraus, daß die Produktmerkmale in der deutschen Patentschrift 1 012 857 auf Wärmedämmung beziehungsweise Isolierung ausgerichtet sind, ergibt sich, daß sie keine bedeutende Saugfähigkeit haben können, denn eine solche würde eine Verminderung der Wärmedämmung bedeuten, wobei demgemäß der Ausdruck »poröse Produkte« nicht mit einer guten Saugfähigkeit in Beziehung zu bringen ist.

Auch hinsichtlich anderer Produkteigenschaften sind die erfindungsgemäß verwendeten Leichtbauplatten den Produkten der deutschen Patentschrift 1 012 857 überliegen. Die erfindungsgemäß verwendeten Leichtbauplatten haben eine wesentlich höhere Festigkeit und wesentlich geringere Schwindung als die Produkte des Verfahrens der genannten Druckschrift.

Außer der Tatsache der Umsetzung eines Siliciumdioxid enthaltenden Materiales (Kieselsäuresol oder Kieselsäurehydrogel) mit einem Calciumoxid enthaltenden Material (Calciumhydroxid) werden die Materialien der deutschen Patentschrift 1 072 232 so ziemlich in allen Hinsichten anders hergestellt als die erfindungsgemäß verwendeten Leichtbauplatten. Im Gegensatz zum Verfahren der genannten Druckschrift wird nämlich beim Verfahren der erfindungsgemäß verwendeten Leichtbauplatten ein Zusatz eines synthetisch hergestellten Calciumsilikatgranulates beziehungsweise -pulvers verwendet, ist das Molverhältnis von CaO zu $SiO_2$ höher und erfolgt eine Autoklavenhärtung. Auch wird die Umsetzung vor dem Formen beim Verfahren zur Herstellung der erfindungsgemäß verwendeten Leichtbauplatten zwingend ohne äußere Wärmeanwendung durchgeführt.

Damit handelt es sich um ganz verschiedene Produkte mit ganz verschiedenen Materialcharakteristiken. So werden die erfindungsgemäß verwendeten Leichtbauplatten im Gegensatz zu denen der genannten Druckschrift selbst bei Erreichung der höchsten Saugkapazität überraschenderweise nicht schmierend, was einen großen Vorteil bei der Verwendung als Ab- beziehungsweise Adsorptionsmittel darstellt. Erfindungsgemäß wird nämlich das Wasser in den Mikroporen gebunden, ohne daß das Produkt seine Struktur ändert, das heißt ohne daß es einer Erweichung unterliegt, und eine solche tritt auch nicht bei optimaler Sättigung des mikroporigen Volumens, zum Beispiel mit Wasser, ein. Im Gegensatz dazu können die Produkte der deutschen Patentschrift 1 072 232 diese Charakteristika nicht entwickeln, da es sich um im Temperaturbereich unter 120° C entstehende (keine Autoklavenhärtung) chemisch instabile Calciumsilikathydratprodukte handelt, die keine Festigkeit haben und bei

Sättigung, beispielsweise mit Wasser, zwangsläufig der Erweichung unterliegen und eine Dispersion bilden. Dadurch kann bei ihnen keine hohe Saugkapazität erreicht werden.

Analog sind die Unterschiede zwischen dem Verfahren zur Herstellung der erfindungsgemäß verwendeten Leichtbauplatten und dem Verfahren der US-Patentschrift 3 660 021 und damit zwischen deren Produkten. Demzufolge haben die erfindungsgemäß verwendeten Leichtbauplatten überraschenderweise höhere Saugkapazitäten (200 bis 230 Gew.-%) in Bezug auf Öl als die Produkte der genannten Druckschrift (praktisch bis 165 Gew.-%), wobei insbesondere die höchste Saugkapazität bei den erfindungsgemäß verwendeten Produkten in viel kürzerer Zeit, nämlich in nur etwa 1 bis 2 Minuten, erreicht wird. Hinzukommt noch, daß es sich bei den erfindungsgemäß verwendeten Produkten im Gegensatz zu denen der US-Patentschrift 3 660 021 nicht um Pigmente handelt, wobei die Ölabsorption beziehungsweise -absorption der erfindungsgemäß verwendeten Leichtbauplatten nach dem in der genannten Druckschrift angegebenen Prüfverfahren nicht geprüft werden kann.

Auch von den Produkten der DDR-Patentschrift 121 505 sind die erfindungsgemäß verwendeten Produkte analog stark verschieden. Von den Unterschieden sei hervorgehoben, daß beim Verfahren zur Herstellung der erfindungsgemäß verwendeten Leichtbauplatten im Gegensatz zum Verfahren der DDR-Patentschrift 121 505 eine Autoklavenhärtung erfolgt. Dies ermöglicht, daß die bei den erfindungsgemäß verwendeten Leichtbauplatten gegebenenfalls eingesetzten Hydrophobierungsmittel eine viel höhere Stabilität und bessere Wirkung als die bei den Produkten der genannten Druckschrift haben. Durch die oben nachgewiesene grundlegende Verschiedenheit der erfindungsgemäß verwendeten Leichtbauplatten und der Produkte der DDR-Patentschrift 121 505 und dadurch, daß in der letzteren keine Rede von der Verwendung von deren Produkten als Ab- beziehungsweise Adsorptionsmittel ist, lenkt diese Druckschrift von der erfindungsgemäßen Verwendung ab. Insbesondere die Tatsache der hohen Rohdichte der Produkte der genannten Druckschrift war geeignet, den Fachmann davon abzuhalten, solche Produkte als Ab- beziehungsweise Adsorptionsmittel zu verwenden. Bei der Porosität der Produkte der genannten Druckschrift handelt es sich also um eine solche, welche Baustoffen mit analoger Rohdichte, wie Kalksandsteinen oder Betonelementen, zuzuordnen ist.

Gegenüber den Produkten der deutschen Auslegeschrift 1 811 131 bringen die erfindungsgemäß zur Ölabsorption beziehungsweise Öladsorption verwendeten Leichtbauplatten den überraschenden Vorteil der überliegenen Saugkapazität von 200 bis 230 Gew.-% statt nur höchstens etwa 50 Gew.-% bei den ersteren mit sich. Hinzukommt noch die überlegene Selektivität ihrer Absorption in Bezug auf Öl, wenn dieses neben Wasser vorliegt, was beispielsweise beim Einsatz zur Beseitigung von Öl auf nassen Straßen von großer Bedeutung ist.

Gegenüber der deutschen Auslegeschrift 1 634 014, in welcher kein Calciumsilikat und für die Hydrophobierung keine Fettamine beziehungsweise Fettaminsalze als solche und auch nicht Polyamidwachse verwendet werden und die Amidbildung auf der Oberfläche der Feststoffteilchen erfolgt, bringen die erfindungsgemäß zur Ölabsorption beziehungsweise Öladsorption verwendeten Leichtbauplatten, deren gegebenenfalls vorliegende Hydrophobierung mit Fettaminen, Fettaminsalzen beziehungsweise Polyamidwachsen vorzugsweise durch Einarbeiten der letzteren in feinster Verteilung unmittelbar in die Ausgangsmischung ihrer Herstellung erfolgt, wodurch eine durchgehende Massenhydrophobierung erreicht wird, den überraschenden Vorteil mit sich, daß bei überlegener Ab- beziehungsweise Adsorptionswirkung in Bezug auf Öle diese bei gleichzeitiger Gegenwart von Öl und Wasser gegenüber dem ersteren optimal selektiv ist.

Auch vom Eternitpulver der deutschen Offenlegungsschrift 2 548 744 sind die erfindungsgemäß verwendeten Leichtbauplatten ersichtlich grundverschieden. Dies zeigt sich auch in den Eigenschaften. So haben die erfindungsgemäß verwendeten Leichtbauplatten überraschenderweise mindestens eine 3mal so große Saugkapazität wie die Produkte der genannten Druckschrift. Auch haben sie den Vorteil der auf Grund des Nichtvorliegens von Asbestfasern fehlenden Toxizität.

Bei der Durchführung der Umsetzung vor dem Formen (Vorreaktion) ohne äußere Wärmeanwendung (Arbeiten ohne Erwärmen) handelte es sich anders ausgedrückt um die Durchführung dieser Umsetzung bei der Temperatur, welche sich bei der Reaktion (durch die Reaktionswärme) von selbst einstellte. Diese betrug im Falle der Verwendung einer 8 bis 12% Feststoffe enthaltenden Dispersion als Rohstoffgemisch im allgemeinen 36 bis 40°C. So ist ein langsamer Aufbau der Gelstruktur mit den daraus sich ergebenden genannten vorteilhaften Materialeigenschaften erzielt worden.

Durch den Zusatz des synthetischen Calciumsilikatgranulates beziehungsweise -pulvers von auf das übrige Ausgangsgemisch abgestimmter Zusammensetzung und durch die Durchführung der Umsetzung vor dem Formen (Vorreaktion) ohne äußere Wärmeanwendung sind vorteilhafte Produkteigenschaften mit monolithischer Materialstruktur erreicht worden. Das zugesetzte synthetisch hergestellte Calciumsilikatgranulat beziehungsweise -pulver war also nicht lediglich ein Füllstoff, sondern ein die Verbesserung bewirkender und gleichzeitig chemisch gleichwertiger, also eine Materialhomogenität sicherstellender Zusatz.

Nach einer bevorzugten Ausführungsform der erfindungsgemäßen Verwendung wird als, gegebenenfalls zerkleinerte, Leichtbauplatte auf der Grundlage einer faserverstärkten Calciumsilikatmasse eine solche eingesetzt, für welche als synthetisches Calciumsilikatgranulat beziehungsweise

-pulver ein solches, welches aus amorphem und/oder kristallinem Siliciumdioxid und Kalk, insbesondere Quarzmehl und Weißfeinkalk, zweckmäßig unter Zusatz von Mikroporenbildnern, durch Autoklavenhärtung hergestellt worden ist, verwendet worden ist.

Die erfindungsgemäß verwendeten, gegebenenfalls zerkleinerten, Leichtbauplatten auf der Grundlage von faserverstärkten Calciumsilikatmassen sind auch dann, wenn sie ohne Zusatz von Mikroporenbildnern hergestellt worden sind, mikroporös. Im Falle des Zusatzes von Mikroporenbildnern sind ihre Porenradien besonders gering, und zwar in der Größenordnung der Radien der Wassermoleküle.

So kann erfindungsgemäß sehr vorteilhaft als, gegebenenfalls zerkleinerte, Leichtbauplatte auf der Grundlage einer faserverstärkten Calciumsilikatmasse eine solche verwendet werden, bei deren Herstellung ein nach dem in der nicht vorveröffentlichten europäischen Patentanmeldung 79 102 551.3 (EP-A-7 586) der Anmelderin beschriebenen Verfahren hergestelltes synthetisches Calciumsilikatgranulat beziehungsweise -pulver als Zusatz eingesetzt worden ist, verwendet werden.

Im allgemeinen sind die Porenradien der erfindungsgemäß verwendeten, gegebenenfalls zerkleinerten, Leichtbauplatten auf der Grundlage von faserverstärkten Calciumsilikatmassen weniger als 60 μm, vorzugsweise wengier als 25 μm, insbesondere weniger als 15 μm.

Zweckmäßig ist das synthetische Calciumsilikat in einer Menge von 6 bis 20 Gew.-%, insbesondere 6 bis 15 Gew.-%, bezogen auf das Ausgangsgemisch, zugesetzt worden. Die Wahl der Menge dieses Zusatzes von synthetischem Calciumsilikat hat sich nach der gewünschten Produktbeschaffenheit gerichtet. Durch sie hat das Verhältnis der Druckfestigkeit zur Biegefestigkeit gesteuert werden können. Es handelte sich also um ein fertigreagiertes autoklavengehärtetes Calciumsilikatprodukt. Seine Härtung kann zweckmäßig bei 10 bis 15 atü (Überdruck von 9,8 bis 14,7 bar) erfolgt sein. So kann durch Vermischen insbesondere von Quarzmehl und Weißkalk, beispielsweise in einem Molverhältnis von CaO zu $SiO_2$ von 1 : 1, unter Zugabe von Wasser und Einarbeiten von Mikroporenbildern bei den Bedingungen der hydrothermalen Autoklavenhärtung ein Granulat, das bei einem Schüttgewicht von etwa 0,3 kg/l eine Druckfestigkeit von etwa 50 bis 60 kg/cm$^2$ (5 bis 6 N/mm$^2$) aufweist, erhalten worden sein. Durch Einarbeiten dieses feinkörnigen Granulates auf der Grundlage von mikroporös gemachtem Calciumsilikat haben sehr vorteilhafte Produkteigenschaften erreicht werden können.

Vorzugsweise ist die Umsetzung vor dem Formen (Vorreaktion) in einer der gewünschten Rohdichte der herzustellenden Leichtbauplatte umgekehrt proportionalen Mindestzeit von mindestens 5 Stunden im Falle der Herstellung einer eine Rohdichte von 800 kg/m$^3$ aufweisenden Leichtbauplatte bis mindestens 12 Stunden im Falle der Herstellung einer eine Rohdichte von 160 kg/m$^3$ aufweisenden Leichtbauplatte steigend durchgeführt worden. Sie ist dann unbegrenzt beständig geblieben, das heißt, daß die gut fließfähige Materialkonsistenz für den Vorgang der Formgebung im Filterpreßverfahren über einen unbegrenzten Verarbeitungszeitraum erhalten geblieben ist, wobei die Materialverteilung in der Filterpreßform gewährleistet geblieben ist. Längere Zeiten der Umsetzung vor dem Formen (Vorreaktionszeiten) haben also die Materialeigenschaften überhaupt nicht beeinträchtigt. Ganz besonders bevorzugt ist es, bei der Umsetzung vor dem Formen (Vorreaktion) intermittierend gerührt zu haben, weil dadurch ganz nach 3 Stunden kurz gerührt zu haben, weil dadurch ganz besonders gute Gelstrukturen sich ausbildeten.

Bei der Herstellung der erfindungsgemäß verwendeten, gegebenenfalls zerkleinerten, Leichtbauplatten auf der Grundlage von faserverstärkten Calciumsilikatmassen kann das amorphe Siliciumdioxid in geringen Mengen, und zwar schon in einem Anteil von mindestens 4 Gew.-%, bezogen auf das gesamte eingesetzte Siliciumdioxid, eingesetzt worden sein, also umgekehrt sogar mit einem Anteil des kristallinen Siliciumdioxides von 96 Gew.-%, bezogen auf das gesamte eingesetzte Siliciumdioxid, gearbeitet worden sein. Als amorphes Siliciumdioxid, gearbeitet worden sein. Als amorphes Siliciumdioxid können für diese Herstellung vorteilhaft hochquellfähige Tonmineralien und/oder Natrium- und/oder Kaliumsilikatlösungen und/oder Kieselgur und/oder Reisschalenasche und/oder pyrogene und/oder gefällte Kieselsäure und/oder amorphes Siliciumdioxid enthaltende industrielle Nebenprodukte, insbesondere hochprozentiger Kieselsäurestaub der Ferrosiliciumerzeugung, in zur Erzielung der gewünschten Rohdichte bei Entfernung des Überschußwassers erforderlicher Menge oder anders ausgedrückt in zur Erzielung des zur jeweiligen Rohdichte notwendigen Wasserrückhaltevermögens erforderlicher Menge verwendet worden sein. Als amorphes Siliciumdioxid waren hochquellfähige Tonmineralien wegen ihres besonders guten Wasserrückhaltevermögens und der daraus sich ergebenden niedrigen Rohdichte des Produktes bevorzugt. Als hochquellfähige Tonmineralien sind besonders bevorzugt dreischichtige Tonmineralien verwendet worden. Beispiele für solche sind Bentonite und Montmorillonite. Vorzugsweise sind die hochquellfähigen Tonmeneralien in einer Menge von 0,5 bis 7 Gew.-%, insbesondere 1 bis 5 Gew.-%, bezogen auf das Ausgangsgemisch, zugesetzt worden. Beispiele für bei der Herstellung der erfindungsgemäß verwendeten, gegebenenfalls zerkleinerten, Leichtbauplatten auf der Grundlage von faserverstärkten Calciumsilikatmassen verwendbare Faserstoffe sind Cellulosefasern, Steinwolle, alkalibeständige Glasfasern und Calciumsilikatfasern.

Vorzugsweise ist die Aufbereitung des Rohstoffgemisches mit einem zur Erzielung einer 8 bis 12% Feststoffe enthaltenden Dispersion erforderlichen Wasserüberschuß durchgeführt worden. Dadurch sind besonders günstige Gelstrukturen mit einer solchen Schlammkonsistenz, welche eine

problemlose Zuführung mittels Pumpen ermöglicht hatte, erhalten worden. Zweckmäßig ist das Entwässern zum Entfernen des überschüssigen Wassers in einer Filterpresse durchgeführt worden und die erhaltenen stabilen plattenförmigen Formkörper mit extrem niedriger Rohdichte sind im plastischen Zustand mittels Trennscheiben in kleinere Formate unterteilt worden. Vorteilhaft ist mit einer Filterpreßform mit beidseitiger und entsprechend den Filterpreßformmaßen ganzflächiger Entwässerung gearbeitet worden, wobei das auf der Oberseite ausgetretene Filtratwasser mittels Vakuum abgesaugt worden ist. Vorzugsweise ist ein stufenlos regelbarer Preßdruck von 1,5 $kp/cm^2$ (0,15 $N/mm^2$) bis 7,5 $kp/cm^2$ (0,75 $N/mm^2$) angewandt und die geformte Platte aus der Filterpresse heraus mit Vakuum bei vollflächiger Vakuumbeanspruchung umgesetzt worden.

So können homogene Platten, die keine Schichtenbildung aufweisen, mit präzisen Maßen, beispielsweise mit Abmessungen von 3,0 m × 1,25 m mit variabler Plattendicke von 10 bis 100 mm, geformt worden sein.

Es können auch materialgleiche Verbundelemente mit einer dünnwandigen äußeren Deckschicht mit einer Rohdichte von 300 bis 800 $kg/m^3$ und einer darauf geschichteten Wärmedämmzone mit einer Rohdichte von 160 bis 300 $kg/m^3$ geformt worden sein, wobei der Haftverbund durch chemische Reaktion unter den Bedingungen der hydrothermalen Autoklavenbehandlung durch materialgleiche C—S—H-Phasen gebildet worden ist.

Die gegebenenfalls vorgenommene Zerkleinerung kann zu Würfeln oder Pellets erfolgt sein. Die erhaltenen Leichtbauplatten auf der Grundlage von faserverstärkten Calciumsilikatmassen können aber auch zu Granulaten oder Pulvern zerkleinert worden sein. Nach dem Zerkleinern kann gegebenenfalls auch ein Klassieren erfolgt sein.

Die erfindungsgemäß verwendeten, gegebenenfalls zerkleinerten, Leichbauplatten auf der Grundlage von faserverstärkten Calciumsilikatmassen haben wie bereits erwähnt eine trockene Rohdichte von etwa 160 $kg/m^3$ bis 800 $kg/m^3$.

Ferner zeichnen sich die erfindungsgemäß verwendeten, gegebenenfalls zerkleinerten, Leichtbauplatten auf der Grundlage von faserverstärkten Calciumsilikatmassen durch ein überlegen hohes und stets gleichmäßig reproduzierbares Ab- beziehungsweise Adsorptionsvermögen aus. Ihre Saugkapazität in Bezug auf Wasser (Sättigungswasseraufnahme) kann 300 Gew.-% (bei einer Rohdichte von 212 $kg/m^3$) und mehr und ihre Saugkapazität in Bezug auf Öl 200 bis 230 Gew.-% (bei einer Rohdichte von 212 $kg/m^3$) und mehr betragen. Noch dazu zeigen sie eine beschleunigte Aufsaugung, den sogenannten »Löschblatteffekt«.

Ein großer Vorteil der erfindungsgemäßen Verwendung ist es, daß die erfindungsgemäß verwendeten, gegebenenfalls zerkleinerten, Leichtbauplatten auf der Grundlage von faserverstärkten Calciumsilikatmassen bei hoher Saugfähigkeit im Gegensatz zu den saugfähigsten Produkten des Standes der Technik selbst bei optimaler Nutzung nicht quellend, nicht klebend und nicht schmierend sind, also keinem Erweichen unterliegen, andererseits aber auch nicht stauben. Darüber hinaus sind sie auch nicht färbend.

Ein weiterer Vorteil der erfindungsgemäßen Verwendung ist es, daß bei den erfindungsgemäß verwendeten, gegebenenfalls zerkleinerten, Leichtbauplatten auf der Grundlage von faserverstärkten Calciumsilikatmassen auch bei optimaler Flüssigkeitssättigung unter Druckbelastung kein Flüssigkeitsaustritt stattfindet. Dies ist insbesondere von Bedeutung, wenn die zu ab- beziehungsweise adsorbierende Flüssigkeit ein Öl ist.

Eine zweckmäßige Ausführungsform der erfindungsgemäßen Verwendung besteht in der zur hydrophilen Ab- beziehungsweise Adsorption. Unter »hydrophiler Ab- beziehungsweise Adsorption« ist die Ab- beziehungsweise Adsorption von Wasser und wäßrigen Medien, beispielsweise Urin, unter Einschluß des Vorliegens derselben in Dampfform zu verstehen.

Die erfindungsgemäß verwendeten, gegebenenfalls zerkleinerten, Leichtbauplatten auf der Grundlage von faserverstärkten Calciumsilikatmassen haben einen alkalischen pH-Wert von im allgemeinen 9 bis 10, vorzugsweise 9,4 bis 9,8. Daher wirken sie säurebindend. Beispielsweise vermögen sie die geruchbildenden Verbindungen, wie Harnsäure, im Tierharn chemisch zu neutralisieren und damit ohne Zusätze geruchbindend zu wirken, was einen großen Vorteil der erfindungsgemäßen Verwendung darstellt und einen weiteren Bereich derselben unter Erstreckung auch auf Gebiete mit ganz speziellen Bedingungen ermöglicht.

Ein weiterer Vorteil der erfindungsgemäßen Verwendung ist die bakterizide Wirkung der erfindungsgemäß verwendeten, gegebenenfalls zerkleinerten, Leichtbauplatten auf der Grundlage von faserverstärkten Calciumsilikatmassen, wobei sie auch in keiner Weise toxisch sind.

Auf Grund dieser Tatsache besteht eine besonders bevorzugte spezielle Ausführungsform der erfindungsgemäßen Verwendung in der als Tierstreu. Ganz besonders bevorzugt ist die Verwendung als Katzenstreu. Gegenüber der Verwendung der bekannten Produkte dieses Gebietes bringt die erfindungsgemäße Verwendung den großen Vorteil mit sich, daß bei überlegenem Ab- beziehungsweise Adsorptionsvermögen (hohe Saugkapazität und beschleunigte Aufsaugung) der erfindungsgemäß verwendeten, gegebenenfalls zerkleinerten, Leichtbauplatten auf der Grundlage von faserverstärkten Calciumsilikatmassen diese auch noch wie bereits erwähnt nicht nur form- und konsistenzbeständig, sondern auch geruchbindend und bakterizid sind.

Eine weitere spezielle Ausführungsform der erfindungsgemäßen Verwendung ist die zur Ab-

beziehungsweise Adsorption von Dämpfen aus Gasen. Ein Beispiel hierfür ist die Ab- beziehungsweise Adsorption von Küchendunst. Dabei können nicht nur das Wasser ab- beziehungsweise adsorbiert werden, sondern auch die Fettbestandteile. Bei diesem speziellen Gebiet ist die leichte Austauschbarkeit und der hygienische Charakter der erfindungsgemäß verwendeten, gegebenenfalls zerkleinerten, Leichtbauplatten auf der Grundlage von faserverstärkten Calciumsilikatmassen von besonderem Vorteil. Ein weiteres Beispiel ist die Gastrocknung.

Wegen des erwähnten alkalischen pH-Bereiches der erfindungsgemäß verwendeten, gegebenenfalls zerkleinerten, Leichtbauplatten auf der Grundlage von faserverstärkten Calciumsilikatmassen ist eine weitere spezielle Ausführungsform der erfindungsgemäßen Verwendung, welche im Abtrennen von sauren Bestandteilen, wie Chlorwasserstoff oder Kohlendioxid, aus Gasgemischen besteht, möglicht.

Eine andere zweckmäßige Ausführungsform der erfindungsgemäßen Verwendung besteht in der zur oleophilen Ab- beziehungsweise Adsorption. Unter »oleophiler Ab- beziehungsweise Adsorption« ist die Ab- beziehungsweise Adsorption von Ölen, wie Mineralölen, Schmierölen und Pflanzenölen, gegebenenfalls aus solche neben anderen Bestandteilen enthaltenden Medien, wie Öl-in-Wasser-Dispersionen, zu verstehen.

Bei der erfindungsgemäßen Verwendung ist auch eine oleophile Ab- beziehungsweise Adsorption neben einer hydrophilen Ab- beziehungsweise Adsorption bis zur Erreichung der Saugkapazität durch spezielle Wahl der, gegebenenfalls zerkleinerten, Leichtbauplatten auf der Grundlage von faserverstärkten Calciumsilikatmassen möglich. Dies kann in der Weise von praktischer Bedeutung sein, daß die Öl ab- beziehungsweise adsorbiert aufweisende, gegebenenfalls zerkleinerte, Leichtbauplatte auf der Grundlage einer faserverstärkten Calciumsilikatmasse durch Wasserabsorption beziehungsweise -adsorption zum Absinken gebracht wird.

Ferner kann der Charakter der erfindungsgemäß verwendeten, gegebenenfalls zerkleinerten, Leichtbauplatten auf der Grundlage von faserverstärkten Calciumsilikatmassen durch Zusätze und deren Menge in Richtung auf mehr hydrophiles Ab- beziehungsweise Adsorptionsverhalten, zu oder in Richtung auf mehr oleophiles Ab- beziehungsweise Adsorptionsverhalten zu gesteuert, also zu Gunsten der Ab- beziehungsweise Adsorption der einen oder anderen Flüssigkeit, die sich in ihrer Oberflächenspannung unterscheiden, geändert werden.

So wird nach einer vorteilhaften Ausführungsform der erfindungsgemäßen Verwendung als, gegebenenfalls zerkleinerte, Leichtbauplatte auf der Grundlage einer faserverstärkten Calciumsilikatmasse eine solche mit einem Gehalt an mindestens einem primären und/oder sekundären Fettamin als noch weiterem Zusatz eingesetzt. Dabei ist es bevorzugt, als, gegebenenfalls zerkleinerte, Leichtbauplatte auf der Grundlage einer faserverstärkten Calciumsilikatmasse eine solche, welche als Fettamin(e) ein solches beziehungsweise solche, dessen beziehungsweise deren Alkylrest(e) 16 bis 20 beziehungsweise je 16 bis 20, insbesondere 18 beziehungsweise je 18, Kohlenstoffatome aufweist beziehungsweise aufweisen, einzusetzen. Bei dieser Ausführungsform ist die hydrophile Ab- beziehungsweise Adsorption bei oleophobem Charakter begünstigt.

Nach einer weiteren vorteilhaften Ausführungsform der erfindungsgemäßen Verwendung wird als, gegebenenfalls zerkleinerte, Leichtbauplatte auf der Grundlage einer faserverstärkten Calciumsilikatmasse eine solche mit einem Gehalt an mindestens einem Polyamidwachs mit einem Schmelzpunkt von 170 bis 195° C, insbesondere 180 bis 190° C, und einem Zersetzungspunkt von mindestens 200° C als noch weiterem Zusatz eingesetzt. Dabei ist es bevorzugt, als, gegebenenfalls zerkleinerte, Leichtbauplatte auf der Grundlage einer faserverstärkten Calciumsilikatmasse eine solche einzusetzen, welche als Polyamidwachs(e) ein solches beziehungsweise solche von nicht amorpher Struktur in mikronisiertem (feingemahlenem) Zustand enthält. Besonders bevorzugt ist es, als, gegebenenfalls zerkleinerte, Leichtbauplatte auf der Grundlage einer faserverstärkten Calciumsilikatmasse eine solche einzusetzen, welche als Polyamidwachs(e) ein Diamidwachs beziehungsweise Diamidwachse der allgemeinen Formel

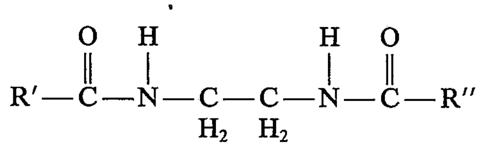

worin R′ und R″ für Alkylreste mit 12 bis 20, insbesondere 12 bis 18, Kohlenstoffatomen stehen, wobei ganz besonders bevorzugt R′ einen Alkylrest mit 12 Kohlenstoffatomen und R″ einen Alkylrest mit 20 oder noch vorteilhafter 18 Kohlenstoffatomen bedeuten, enthält. Bei dieser Ausführungsform ist die Ab- beziehungsweise Adsorption oleophil beziehungsweise nach dem oleophilen Verhalten zu verschoben.

Nach einer anderen vorteilhaften Ausführungsform der erfindungsgemäßen Verwendung wird als, gegebenenfalls zerkleinerte, Leichtbauplatte auf der Grundlage einer faserverstärkten Calciumsilikatmasse eine solche mit einem Gehalt an mindestens einem primären und/oder sekundären Fettaminsalz als noch weiterem Zusatz eingesetzt. Dabei ist es bevorzugt, als, gegebenenfalls zerkleinerte, Leichtbauplatte auf der Grundlage einer faserverstärkten Calciumsilikatmasse eine

solche, welche als Fettaminsalz(e) ein solches beziehungsweise solche einzusetzen, dessen beziehungsweise deren Alkylrest(e) 16 bis 20 beziehungsweise je 16 bis 20, insbesondere 18 beziehungsweise je 18, aufweisen. Es ist auch bevorzugt, als, gegebenenfalls zerkleinerte, Leichtbauplatte auf der Grundlage einer faserverstärkten Calciumsilikatmasse eine solche einzusetzen, welche als Fettaminsalz(e) ein solches beziehungsweise solche mit einer organischen Carbonsäure beziehungsweise organischen Carbonsäuren mit 1 bis 11, insbesondere 2 bis 4, Kohlenstoffatomen, ganz besonders, Essigsäure, enthält. Ferner ist es bevorzugt, als, gegebenenfalls zerkleinerte, Leichtbauplatte auf der Grundlage einer faserverstärkten Calciumsilikatmasse eine solche einzusetzen, welche als Fettaminsalz(e) ein solches beziehungsweise solche, bei welchem beziehungsweise welchen nur ein Teil, insbesondere 25 bis 30%, durch die Säure neutralisiert ist, enthält. Auch bei dieser Ausführungsform ist die Ab- beziehungsweise Adsorption oleophil beziehungsweise nach dem oleophilen Verhalten zu verschoben.

Gegebenenfalls kann als, gegebenenfalls zerkleinerte, Leichtbauplatte auf der Grundlage einer faserverstärkten Calciumsilikatmasse eine solche, welche mindestens ein Polyamidwachs zusammen mit mindestens einem Fettaminsalz enthält, eingesetzt werden.

Es ist zweckmäßig, als, gegebenenfalls zerkleinerte, Leichtbauplatte auf der Grundlage einer faserverstärkten Calciumsilikatmasse eine solche einzusetzen, in welcher das Fettamin beziehungsweise die Fettamine oder das Polyamidwachs beziehungsweise die Polyamidwachse und/oder das Fettaminsalz beziehungsweise die Fettaminsalze durch Zugabe zur Herstellungsausgangsmischung vor deren Umsetzen eingebracht worden ist beziehungsweise sind. Dabei müssen natürlich die Mengen, wie die oben angegebenen zweckmäßigen Mengenbereiche, der übrigen Ausgangs- und Zusatzstoffe, entsprechend anteilig vermindert sein. Überraschenderweise haben nämlich die genannten Zusatzstoffe die wesentliche Eigenschaft, daß sie das Verfahren zur Herstellung der erfindungsgemäß verwendeten, gegebenenfalls zerkleinerten, Leichtbauplatten auf der Grundlage von faserverstärkten Calciumsilikatmassen und deren gewünschte Produktcharakteristik vermöge ihrer chemischen Beständigkeit gegenüber den verfahrensbedingten chemisch-physikalischen Einwirkungen nicht beeinträchtigen. So können die erforderlichen Herstellungsverfahrensschritte, beispielsweise die Temperaturbehandlung bei etwa 200°C unter den Bedingungen der Hydrothermalhärtung, ohne Beeinträchtigung uneingeschränkt durchgeführt worden sein, und zwar ohne daß die angestrebten Produkteigenschaften in ihrer Wirksamkeit hinsichtlich der erzielten überlegenen Saugfähigkeit in Ausrichtung auf Flüssigkeiten mit verschiedener Oberflächenspannung abgebaut und die sonstigen Produktparameterwerte beeinträchtigt würden.

Im Falle eines Fettamines beziehungsweise von Fettaminen als Zusatz ist es bevorzugt, daß dessen beziehungsweise deren Zugabe zur Herstellungsausgangsmischung in einer Menge von 0,05 bis 0,5 Gew.-%, insbesondere 0,05 bis 0,3 Gew.-%, insbesondere 0,05 bis 0,3 Gew.-%, ganz besonders 0,25 Gew.-%, bezogen auf die eingesetzte Feststoffgemischmenge als Trockengewicht berechnet, erfolgt ist. Dabei sind diese Zusätze vorteilhaft in Form von, vorzugsweise 5 bis 15%igen, insbesondere 10%igen, wäßrigen Dispersionen zugegeben worden. Die Menge der Dispersion muß natürlich der zuzugebenden Zusatztrockenmenge angepaßt worden sein. Beispielsweise im Falle einer 10%igen wäßrigen Dispersion ist der bevorzugte Mengenbereich derselben 0,5 bis 5 Gew.-%, insbesondere 0,5 bis 3 Gew.-%, ganz besonders 2,5 Gew.-%, bezogen auf die eingesetzte Feststoffgemischmenge als Trockengewicht berechnet.

Im Falle eines Polyamidwachses beziehungsweise von Polyamidwachsen als Zusatz ist es bevorzugt, daß dessen beziehungsweise deren Zugabe zur Herstellungsausgangsmischung in einer Menge von 3 bis 7 Gew.-%, insbesondere 5 Gew.-%, bezogen auf die eingesetzte Feststoffgemischmenge als Trockengewicht berechnet, erfolgt ist. Je höher die Polyamidwachsmenge ist, um so stärker oleophil ist das Ab- beziehungsweise Adsorptionsverhalten der so erhaltenen erfindungsgemäß verwendeten, gegebenenfalls zerkleinerten, Leichtbauplatten auf der Grundlage von faserverstärkten Calciumsilikatmassen. Bei Polyamidwachsmengen unterhalb 3 Gew.-% ist das Ab- beziehungsweise Adsorptionsverhalten nicht mehr ganz oder bestimmend oleophil.

Im Falle eines Fettaminsalzes beziehungsweise von Fettaminsalzen als Zusatz ist es bevorzugt, daß dessen beziehungsweise deren Zugabe zur Herstellungsausgangsmischung in einer Menge von 0,05 bis 0,5 Gew.-%, insbesondere 0,05 bis 0,3 Gew.-%, ganz besonders 0,25 Gew.-%, bezogen auf die eingesetzte Feststoffgemischmenge als Trockengewicht berechnet, erfolgt ist. Dabei sind diese Zusätze vorteilhaft in Form von, vorzugsweise 5 bis 15%igen, insbesondere 10%igen, wäßrigen Dispersionen zugegeben worden. Die Menge der Dispersion muß natürlich auch hier der zuzugebenden Zusatztrockenmenge angepaßt worden sein. Beispielsweise im Falle einer 10%igen wäßrigen Dispersion ist der bevorzugte Mengenbereich derselben 0,5 bis 5 Gew.-%, insbesondere 0,5 bis 3 Gew.-%, ganz besonders 2,5 Gew.-%, bezogen auf die eingesetzte Feststoffgemischmenge als Trockengewicht berechnet. Je höher die Fettaminsalzmenge ist, um so stärker oleophil ist das Ab- beziehungsweise Adsorptionsverhalten der so erhaltenen erfindungsgemäß verwendeten, gegebenenfalls zerkleinerten, Leichtbauplatten auf der Grundlage von faserverstärkten Calciumsilikatmassen.

Nach einer noch weiteren vorteilhaften Ausführungsform der erfindungsgemäßen Verwendung wird als, gegebenenfalls zerkleinerte, Leichtbauplatte auf der Grundlage einer faserverstärkten Calciumsilikatmasse einschließlich einer ein oder mehr Polyamidwachse und/oder Fettaminsalze

enthaltenden eine solche eingesetzt, welche nach ihrem Trocknen mit einem oder mehreren verseifungsbeständigen Alkylalkoxysilanen und/oder Phenylalkoxysilanen behandelt worden ist. Dabei kann diese Behandlung vor oder nach dem gegebenenfalls erfolgten Klassieren vorgenommen worden sein. Sie kann durch Tauchen oder Besprühen der, gegebenenfalls zerkleinerten, Leichtbauplatten auf der Grundlage von faserverstärkten Calciumsilikatmassen in die beziehungsweise mit den Alkylalkoxysilane(n) und/oder Phenylalkoxysilane(n) oder Aufdampfen der letzteren auf die ersteren vorgenommen worden sein. Vorzugsweise wird als, gegebenenfalls zerkleinerte, Leichtbauplatte auf der Grundlage einer faserverstärkten Calciumsilikatmasse eine solche eingesetzt, welche als Alkylalkoxysilan(e) ein solches beziehungsweise solche, dessen beziehungsweise deren, gegebenenfalls verzweigter, Alkylteil 1 bis 6, insbesondere 3 bis 6, ganz besonders 3, Kohlenstoffatome aufweist und dessen beziehungsweise deren, gegebenenfalls verzweigter, Alkoxyteil 1 bis 3, insbesondere 3, Kohlenstoffatome hat, enthält. Es ist bevorzugt, als, gegebenenfalls zerkleinerte, Leichtbauplatte auf der Grundlage einer faserverstärkten Calciumsilikatmasse eine solche einzusetzen, welche als Phenylalkoxysilan(e) ein solches beziehungsweise solche, dessen beziehungsweise deren, gegebenenfalls verzweigter, Alkoxyteil 1 bis 3, insbesondere 3, Kohlenstoffatome aufweist, enthält. Am meisten bevorzugt ist der Alkylrest ein Isopropylrest und der Alkoxyrest ein Isopropoxyrest. Ferner ist es bevorzugt, daß die Behandlung mit dem verseifungsbeständigen Alkylalkoxysilan und/oder Phenylalkoxysilan beziehungsweise den verseifungsbeständigen Alkylalkoxysilanen und/oder Phenylalkoxysilanen bis zur Aufnahme einer Menge von mindestens 0,5 Gew.-%, insbesondere 1,2 bis 1,6 Gew.-%, ganz besonders 0,9 Gew.-%, erfolgt ist.

Wie bereits erwähnt sind die erfindungsgemäß verwendeten, gegebenenfalls zerkleinerten, Leichtbauplatten auf der Grundlage von faserverstärkten Calciumsilikatmassen an sich schon geruchbindend. Es ist aber auch möglich, solche mit einem Zusatz von Deodorierungsmitteln, wie Parfümölen, die auf sie aufgebracht worden sein können, zu verwenden. Dies ist insbesondere bei der speziellen Verwendung als Tierstreu von Bedeutung.

Gegebenenfalls können erfindungsgemäß, gegebenenfalls zerkleinerte, Leichtbauplatten auf der Grundlage von fasserverstärkten Calciumsilikatmassen mit einem Zusatz von Farbindikatoren zur Kontrolle des Sättigungsgrades der Ab- beziehungsweise Adsorption verwendet werden.

Die Erfindung wird an Hand der folgenden Beispiele in Verbindung mit den Zeichnungen näher erläutert.

Hierbei sind

Fig. 1 das Fließschema der Herstellung einer nach einer Ausführungsform der Erfindung verwendeten Leichtbauplatte auf der Grundlage einer faserverstärkten Calciumsilikatmasse,

Fig. 2 das Fließschema der Herstellung von nach anderen Ausführungsformen der Erfindung verwendeten Leichtbauplatten auf der Grundlage von faserverstärkten Calciumsilikatmassen und

Fig. 3 das Diagramm der Wasseraufnahme mit der Zeit einer erfindungsgemäß verwendeten Leichtbauplatte auf der Grundlage einer faserverstärkten Calciumsilikatmasse und eines Handelsproduktes auf Sepiolithbasis als Vergleichsverbindung.

## Beispiel 1

Die Herstellung der verwendeten Leichtbauplatten auf der Grundlage einer faserverstärkten Calciumsilikatmasse erfolgte unter Bezugnahme auf die Fig. 1 wie folgt:

Es wurden folgende Ausgangsfeststoffe verwendet:

| | |
|---|---|
| 23,0 Gew.-% | Quarzmehl |
| 12,0 Gew.-% | amorphes Siliciumdioxidmaterial*) |
| 44 Gew.-% | Weißfeinkalk oder Kalkhydrat |
| 6 Gew.-% | Calciumsilikat**) |
| 7 Gew.-% | Bentonit |
| 8 Gew.-% | Cellulosefasern |

*) in Form von Natrium- oder Kaliumsilikat, gefällter oder pyrogener Kieselsäure, Kieselgur oder hochdisperser Siliciumdioxydfüllstoffe, die als Nebenprodukte bei chemischen Verfahren anfielen und von amorpher Struktur waren.

**) Es ist synthetisch hergestellt und nach der Autoklavenhärtung auf eine Korngröße von kleiner als 1,5 mm, vorzugsweise kleiner als 0,5 mm, zerkleinert worden.

Es wurden das Quarzmehl aus einem Quarzmehlsilo 1, das Calciumsilikat aus einem Calciumsilikatbehälter 2, der Weißfeinkalk oder das Kalkhydrat aus einem Kalksilo 3 und der Bentonit aus einem Bentonitbehälter 6 über eine Vierkomponentenwaage 7 einem Intensivmischer 11 zugeführt. Diesem Intensivmischer 11 wurde auch Natriumsilikat aus einem Natriumsilikatlösungsbehälter 4 als wäßrige Lösung über einen Dosierbehälter 5 zugeführt. Ferner wurde dem Intensivmischer 11 ein Faserbrei der angegebenen Fasern aus einem Dissolverbehälter 9, das heißt einem mit bei

schonender Behandlung der Faserstoffe eine optimale Aufteilung der Fasern im Wasserüberschuß (in diesem Beispiel wurden 1 Gew.-Teil Feststoffe und 20 Gew.-Teile Wasser verwendet) herbeiführenden mit Zerkleinerungs- und Mischwerkzeugen versehenen Behälter, über einen Dosierbehälter 10 zugeführt. Der eingesetzte Cellulosefaserstoff wurde mit Hilfe des Dissolverbehälters 9 zu einem dünnen Brei aufbereitet, wobei kein Lösungsvorgang stattfand. Die Verwendung des Dissolverbehälters 9 war für die Herstellung der Faserstoffdispersion erforderlich, um die Verteilung der so aufbereiteten Faserstoffe im Intensivmischer 11 zu gewährleisten und die Fasern durch den Mischarbeitsgang nicht zu zerstören. Schließlich wurde dem Intensivmischer 11 aus einem Wasserbehälter 8 Wasser zugeführt. Im Intensivmischer 11 wurde eine dünnbreiige, gut pumpfähige Dispersion erzielt. Diese wurde nach abgeschlossener Aufbereitung in Reaktionsbehälter 12 gepumpt. In diesen bildete sich nach einer Reaktionszeit von etwa 12 Stunden die Gelstruktur optimal aus, wobei sich die Konsistenz so einstellte, daß die Pumpfähigkeit dieser Aufschlämmung unverändert erhalten blieb, was von besonderer Bedeutung ist.

Die Formgebung erfolgte in der Weise, daß ein bestimmtes Aufschlämmungsvolumen aus den Reaktionsbehältern 12 in einen Dosierbehälter 13 gepumpt wurde. Dieses Aufschlämmungsvolumen ergab sich aus dem Feststoffgehalt dieser Calciumsilikataufschlämmung, dem gewünschten Plattenvolumen und dem gewünschten Raumgewicht der herzustellenden Platte. Dieses im Dosierbehälter 13 bemessene Aufschlämmungsvolumen wurde in eine rechteckige Filterpreßform 14 eingefüllt und gleichmäßig auf deren Preßfläche verteilt (Füllstation A). Nach der Durchführung des Füllvorganges wurde die Filterpreßform 14 von der Füllstation A mit Hilfe einer als umlaufende Filtersiebbandstrecke ausgebildeten Förderstation 15, auf welcher die Filterpreßform 14 angeordnet wurde, durch Verfahren des Filtersiebbandes der Förderstation 15 um einen Arbeitstakt in die Filterpreßstation B versetzt. In dieser erfolgte der Preßvorgang durch Absenken des oberen Teiles der Filterpreßform 14, welcher einen gleichmäßig verteilten Preßdruck auf die gesamte Preßfläche ausübte, mit beidseitiger Entwässerung. Das Filtersiebband der Förderstation 15 bot die Voraussetzung für das Abführen des auf der Boden- beziehungsweise Unterseite der Filterpreßform 14 austretenden Filtrat- beziehungsweise Preßwassers. Das auf der Bodenseite der Filterpreßform 14 ausgetretene Filtratwasser lief von einer Auffangwanne 17 in einen Sammelbehälter 18. Das an der Oberseite der Filterpreßform 14 ausgetretene Filtrat wurde vollständig abgesaugt und ebenfalls in den Sammelbehälter 18 entleert. Dieses Filtratwasser wurde in den Kreislauf zurückgeführt und einer neuen Ausgangsmischung zugesetzt. Die besondere Konstruktion der Filterpreßform 14 ermöglichte die Herstellung von Platten mit Abmessungen von höchstens 3000 mm × 1250 mm und Dicken von 10 bis 100 mm, die nach bestimmten Rastermaßen mittels einer Schneidevorrichtung in entsprechend kleinere Einheiten unterteilt werden konnten.

Nach abgeschlossenem Preßvorgang wurde die Platte beziehungsweise wurden mehrere kleinere Einheiten, die in ihrer Summe dem Maximalmaß entsprachen, mittels einer vollflächig wirksamen Vakuumanlage 16, die mit einer Vakuumhaube, welche auf die gepreßte Platte beziehungsweise die mehreren kleineren Einheiten abgesenkt wurde und vollflächig auflag, aus der Filterpreßform 14 gehoben und mittels der Förderstation 15 auf einer speziell ausgebildete Horde 20 umgesetzt. Die Abmessungen der Vakuumsaugfläche entsprachen dem größten Plattenpreßmaß und die Vakuumanlage 16 war in mehrere Kammern unterteilt, wodurch die Voraussetzung geschaffen wurde, um sowohl die einzelne Platte als auch ein Vielfaches entsprechend kleinerer Platteneinheiten von der Förderstation 15 abzuheben und auf die Horden 20 umzusetzen. Die Förderstation 15 hatte also die Aufgabe des Transportes der Filterpreßform 14 in die einzelnen Arbeitsstationen, die den gesamten Preßvorgang und das Umsetzen der Platten ausmachen.

Die Horden 20 waren als rechteckige Rahmenkonstruktion ausgebildet und mit einem gelochten Blech abgedeckt. Die mit Platten belegten Horden 20 wurden übereinandergestapelt. An den beiden Längsseiten der Horden 20 befanden sich je zwei auswechselbare Distanzstücke, so daß in Abhängigkeit von der jeweils gefertigten Plattendicke im übereinander gestapelten Hordenpaket 20 jeweils zwischen der Oberkante der Platte und der Unterkante der darüber befindlichen Horde 20 ein Freiraum von etwa 2 cm blieb. Es ist, insbesondere bei unterschiedlichen Plattendicken, zur optimalen Nutzung des Autoklavenvolumens und des Trockners von Bedeutung, daß die als Abstützung der übereinander gestaplten Horden 20 erforderlichen Distanzstücke entsprechend den variablen Plattendicken auswechselbar waren.

Die Horden 20 wurden mit Hilfe einer Seitentransportanlage 19 mittels einer Vakuumhaube derselben von der Förderstation 15 abgehoben und an seitlich zur Filterpreßanlage angeordnete Hordenwagen 21 übergeben beziehungsweise auf diesen abgesetzt.

Die auf den Hordenwagen 21 gestapelten Horden 20 wurden zu einem Wagenzug zusammengestellt und in einen Autoklaven 22 eingefahren. Hier erfolgte die hydrothermale Härtung in einem Härtezyklus von etwa 10 Stunden.

Nach abgeschlossener Autoklavenhärtung wurden die Hordenwagen 21 in einen Trockner 23 eingefahren und bei etwa 140° C bis zur Erreichung einer Restfeuchte von etwa 6 bis 10% getrocknet.

Die getrockneten Platten wurden aus dem Trockner 23 ausgefahren und mit Hilfe einer der Seitentransportanlage 19 ähnlichen Entstapelanlage mit einer Vakuumhaube von den Hordenwagen 21 abgehoben und auf Paletten umgesetzt und übereinandergestapelt. Die Plattenpakete 24 wurden

mit Folie verpackt und waren versandfertig.

Die durchschnittlichen Materialparameterwerte der erhaltenen Leichtbauplatten waren wie folgt (hier und im folgenden bedeuten die internationale Dimension

$$1\ N/mm^2\ [Newton/Quadratmillimeter] = 10\ kp/cm^2$$

und die internationale Dimension

$$W/mK\ [Watt/Meter \cdot Kelvin] = \frac{kcal}{m \cdot Stunde \cdot {}^\circ C} \times 1{,}163):$$

| | |
|---|---|
| Rohdichte in $kg/m^3$ | 212 |
| Druckfestigkeit in $N/mm^2$ | 1,5 |
| Schwindung bei 750° C in % | 1,2 |
| Schwindung bei 950° C in % | 1,6 |
| Wärmeleitzahl in W/mK | 0,040 |
| Saugkapazität in Bezug auf Wasser [Wasseraufnahme]: | 300 Gew.-% |
| Saugkapazität in Bezug auf Öl (Maschinenöl): | 200 Gew.-% |
| pH-Wert: | 9,4 bis 9,8. |

In der Fig. 3 ist auf der Ordinate die Wasseraufnahme in Gew.-% und auf der Abszisse die Zeit in Minuten aufgetragen. Die Kurve I ist der Verlauf der Wasseraufnahme bei den wie vorstehend beschrieben hergestellten erfindungsgemäß verwendeten Leichtbauplatten auf der Grundlage der faserverstärkten Calciumsilikatmasse und die Kurve II ist der Verlauf der Wasseraufnahme bei einem Handelsprodukt auf Sepiolithbasis, dem bisher besten Katzenstreuhandelsprodukt.

Aus der Fig. 3 geht eindeutig hervor, daß die Leichtbauplatten auf der Grundlage der faserverstärkten Calciumsilikatmasse hinsichtlich der Ab- beziehungsweise Adsorption mit einer Wasseraufnahme von 300 Gew.-% dem Handelsprodukt mit einer Wasseraufnahme von nur 100 Gew.-% bei weitem überlegen sind. Da auch bezüglich der Geruchbindung und in den anderen weiter oben erörterten Hinsichten die ersteren dem letzteren bei weitem überlegen sind, eigneten sich die ersteren zur Verwendung als überlegene Tierstreu. Dabei ist die Verwendung auch in zerkleinerter Form möglich.

## Beispiel 2

Die Herstellung der verwendeten Leichtbauplatten auf der Grundlage einer faserverstärkten Calciumsilikatmasse erfolgte unter Bezugnahme auf die Fig. 1 wie folgt:

Es wurde das Beispiel 1 mit dem Unterschied wiederholt, daß folgende Ausgangsfeststoffe verwendet wurden:

| | |
|---|---|
| 31 Gew.-% | Quarzmehl |
| 9 Gew.-% | amorphes Siliciumdioxidmaterial*) |
| 37 Gew.-% | Weißfeinkalk oder Kalkhydrat |
| 12 Gew.-% | Calciumsilikat**) |
| 3 Gew.-% | Bentonit |
| 8 Gew.-% | Cellulosefasern. |

*) die entsprechende Bemerkung des Beispiels 1 gilt auch hier.
**) die entsprechende Bemerkung des Beispiels 1 gilt auch hier.

In diesem Falle bildete sich nach einer Reaktionszeit von etwa 6 Stunden die optimale Gelstruktur aus.

Die durchschnittlichen Materialparameterwerte der erhaltenen Leichtbauplatten waren wie folgt:

| | |
|---|---|
| Rohdichte in $kg/m^3$ | 212 |
| Druckfestigkeit in $N/mm^2$ | 1,8 |
| Schwindung bei 750° C in % | 1,2 |
| Schwindung bei 950° C in % | 1,5 |
| Wärmeleitzahl in W/mK | 0,042 |
| Saugkapazität in Bezug auf Wasser [Wasseraufnahme]: | 320 Gew.-% |
| Saugkapazität in Bezug auf Öl (Maschinenöl): | 214 Gew.-% |
| pH-Wert: | 9,4 bis 9,8. |

Die so hergestellten Leichtbauplatten auf der Grundlage der faserverstärkten Calciumsilikatmasse eigneten sich ähnlich vorteilhaft wie die im Beispiel 1 hergestellten zur Verwendung als Tierstreu.

Beispiel 3

Die Herstellung der verwendeten Leichtbauplatten auf der Grundlage einer faserverstärkten Calciumsilikatmasse erfolgte unter Bezugnahme auf die Fig. 1 wie folgt:

Es wurde das Beispiel 1 mit dem Unterschied wiederholt, daß folgende Ausgangsfeststoffe verwendet wurden:

| | |
|---|---|
| 30 Gew.-% | Quarzmehl |
| 6 Gew.-% | amorphes Siliciumdioxidmaterial*) |
| 35,5 Gew.-% | Weißfeinkalk oder Kalkhydrat |
| 20 Gew.-% | Calciumsilikat**) |
| 0,5 Gew.-% | Bentonit |
| 8 Gew.-% | Cellulosefasern. |

*) die entsprechende Bemerkung des Beispiels 1 gilt auch hier.
**) die entsprechende Bemerkung des Beispiels 1 gilt auch hier.

In diesem Falle bildete sich nach einer Reaktionszeit von etwa 5 Stunden die optimale Gelstruktur aus.

Die durchschnittlichen Materialparameterwerte der erhaltenen Leichtbauplatten waren wie folgt:

| | |
|---|---|
| Rohdichte in kg/$m^3$ | 212 |
| Druckfestigkeit in N/$mm^2$ | 2,0 |
| Schwindung bei 750° C in % | 1,0 |
| Schwindung bei 950° C in % | 1,3 |
| Wärmeleitzahl in W/mK | 0,40 |
| Saugkapazität in Bezug auf Wasser [Wasseraufnahme]: | 310 Gew.-% |
| Saugkapazität in Bezug auf Öl (Maschinenöl): | 208 Gew.-% |
| pH-Wert: | 9,4 bis 9,8. |

Die so hergestellten Leichtbauplatten auf der Grundlage der faserverstärkten Calciumsilikatmasse eigneten sich ähnlich vorteilhaft wie die im Beispiel 1 hergestellten zur Verwendung als Tierstreu.

Beispiel 4

Die Herstellung der verwendeten Leichtbauplatten auf der Grundlage einer faserverstärkten Calciumsilikatmasse mit einem Gehalt an einem Polyamidwachs erfolgte unter Bezugnahme auf die Fig. 2 wie folgt:

Es wurden neben der im Beispiel 1 verwendeten Wassermenge folgende Ausgangsstoffe verwendet:

| | |
|---|---|
| 21,8 Gew.-% | Quarzmehl |
| 11,4 Gew.-% | amorphes Siliciumdioxidmaterial*) |
| 41,8 Gew.-% | Weißfeinkalk oder Kalkhydrat |
| 5,7 Gew.-% | Caciumsilikat**) |
| 6,6 Gew.-% | Bentonit |
| 7,7 Gew.-% | Cellulosefasern |
| 5 Gew.-% | eines nicht amorphen mikronisierten Diamidwachses der Formel |

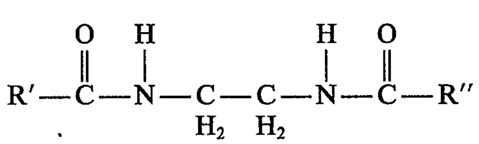

worin R′ für einen Alkylrest mit 12 Kohlenstoffatomen steht und R″ einen Alkylrest mit 18 Kohlenstoffatomen bedeutet, mit einem Schmelzpunkt von 185°C und einem Zersetzungspunkt von etwa 205°C [Lanco-Wax HM 1666, bezogen von der Firma Langer & Co., Ritterhude].

*) in Form von Natrium- oder Kaliumsilikat, gefällter oder pyrogener Kieselsäure, Kieselgur oder hochdisperser Siliciumdioxidfüllstoffe, die als Nebenprodukte bei chemischen Verfahren anfielen und von amorpher Struktur waren.
**) Es ist synthetisch hergestellt und nach der Autoklavenhärtung auf eine Korngröße von kleiner als 1,5 mm, vorzugsweise kleiner als 0,5 mm, zerkleinert worden.

Die Verfahrensweise des Beispiels 1 wurde mit dem Unterschied durchgeführt, daß dem Intensivmischer 11 aus einem Zusatzsilo 25 über eine weitere Waage 26 das obige Diamidwachs zugeführt wurde. Die übrigen Teile der Vorrichtung der Fig. 2 sind wie die mit denselben Bezugszeichen bezeichneten entsprechenden Teile der Vorrichtung der Fig. 1.

Die Ab- beziehungsweise Adsorptionsparameter der erhaltenen Leichtbauplatten auf der Grundlage der faserverstärkten Calciumsilikatmasse waren wie folgt:

| | |
|---|---|
| Saugkapazität in Bezug auf Öl (Maschinenöl): | 205 Gew.-% |
| Saugkapazität in Bezug auf Wasser [Wasseraufnahme]: | 10 Gew.-%. |

Die übrigen Materialparameter waren wie im Beispiel 1.

Bei den bekannten Handelsprodukten auf anorganischer Grundlage ist die Saugkapazität in Bezug auf Öl viel geringer, wie es aus der folgenden Zusammenstellung hervorgeht:

| | |
|---|---|
| Sepiolithe (Rohdichte: 600 kg/$m^3$) | 48 Gew.-% |
| Bimsstein (Rohdichte: 570 kg/$m^3$) | 53 Gew.-% |
| »Hauser 1« (sepiolithähnlich) | 68 Gew.-% |
| Attapulgit (Rohdichte: 500 kg/$m^3$) | 72 Gew.-% |
| »Hykro« | 61,5 Gew.-%. |

Aus dem Obigen geht hervor, daß die erhaltenen Leichtbauplatten auf der Grundlage der faserverstärkten Calciumsilikatmasse nahezu ausschließlich Öl ab- beziehungsweise adsorbierten, also ihr Ab- beziehungsweise Adsorptionsverhalten nahezu völlig oleophil war. Daher eigneten sie sich als überlegene Ab- beziehungsweise Adsorptionsmittel für Öle, beispielsweise wenn sie ausgelaufen sind.

## Beispiel 5

Die Herstellung der verwendeten Leichtbauplatten auf der Grundlage einer faserverstärkten Calciumsilikatmasse mit einem Gehalt an einem Fettaminsalz erfolgte unter Bezugnahme auf die Fig. 2 wie folgt:

Es wurden neben der im Beispiel 1 verwendeten Wassermenge folgende Ausgangsstoffe verwendet:

| | |
|---|---|
| 30,9 Gew.-% | Quarzmehl |
| 9 Gew.-% | amorphes Siliciumdioxidmaterial*) |
| 36,9 Gew.-% | Weißfeinkalk oder Kalkhydrat |
| 12 Gew.-% | Calciumsilikat**) |
| 3 Gew.-% | Bentonit |
| 8 Gew.-% | Cellulosefasern |
| 0,2 Gew.-% | zu 28% mit Essigsäure neutralisiertes Stearylamin in Form von 2,0 Gew.-% seiner 10%igen wäßrigen Dispersion |

*) die entsprechende Bemerkung des Beispiels 1 gilt auch hier.
**) die entsprechende Bemerkung des Beispiels 1 gilt auch hier.

Die Verfahrensweise des Beispiels 4 wurde mit dem Unterschied durchgeführt, daß an Stelle des Polyamidwachses das teilweise neutralisierte Stearylamin aus dem Zusatzsilo 25 über die weitere Waage 26 dem Intensivmischer 11 zugeführt wurde.

Die Ab- beziehungsweise Adsorptionsparameter der erhaltenen Leichtbauplatten auf der Grundlage der faserverstärkten Calciumsilikatmasse waren wie folgt:

| | |
|---|---|
| Saugkapazität in Bezug auf Öl (Maschinenöl): | 220 Gew.-% |
| Saugkapazität in Bezug auf Wasser [Wasseraufnahme]: | 2 Gew.-%. |

Die übrigen Materialparameter waren wie im Beispiel 2.

Daraus geht hervor, daß die erhaltenen Leichtbauplatten auf der Grundlage der faserverstärkten Calciumsilikatmasse nahezu ausschließlich Öl ab- beziehungsweise adsorbierten, also ihr Ab- beziehungsweise Adsorptionsverhalten nahezu völlig oleophil war. Daher eigneten sie sich als den bekannten Handelsprodukten ebenfallls überlegene Ab- beziehungsweise Adsorptionsmittel für Öle, beispielsweise wenn sie ausgelaufen sind.

Beispiel 6

Die Herstellung der verwendeten hydrophobierten Leichtbauplatten auf der Grundlage einer faserverstärkten Calciumsilikatmasse erfolgte wie folgt:

Die im Beispiel 1 erhaltenen Leichtbauplatten auf der Grundlage der Calciumsilikatmasse wurden mit Isopropylisopropoxysilan bis zur Aufnahme von 0,9 Gew.-% desselben besprüht.

So wurden Leichtbauplatten auf der Grundlage der faserverstärkten Silikatmasse mit einer Saugkapazität von 210 Gew.-% in Bezug auf Öl (Maschinenöl) erhalten. Sie waren rein oleophil und hydrophob, wobei die Wasseraufnahme nach der Wasserlagerung (überstehende Wassersäule: etwa 1 cm) von 72 Stunden unter 1,0% lag. Daher eigneten sie sich als den bekannten Handelsprodukten ebenfalls überlegene Ab- beziehungsweise Adsorptionsmittel für Öle, beispielsweise wenn sie ausgelaufen sind.

Beispiel 7

Die Herstellung der verwendeten Leichtbauplatten auf der Grundlage einer faserverstärkten Calciumsilikatmasse erfolgte wie folgt:

Die Verfahrensweise des Beispiels 4 wurde mit dem Unterschied wiederholt, daß neben der im Beispiel 1 verwendeten Wassermenge folgende Ausgangsstoffe verwendet wurden:

| | |
|---|---|
| 28,7 Gew.-% | Quarzmehl |
| 5,7 Gew.-% | amorphes Siliciumdioxidmaterial*) |
| 34,0 Gew.-% | Weißfeinkalk oder Kalkhydrat |
| 18,5 Gew.-% | Calciumsilikat**) |
| 0,5 Gew.-% | Bentonit |
| 7,6 Gew.-% | Cellulosefasern |
| 5 Gew.-% | des im Beispiel 4 verwendeten Diamidwachses. |

*) die entsprechende Bemerkung des Beispiels 1 gilt auch hier.
**) die entsprechende Bemerkung des Beispiels 1 gilt auch hier.

Die Ab- beziehungsweise Adsorptionsparameter der erhaltenen Leichtbauplatten auf der Grundlage der faserverstärkten Calciumsilikatmasse waren wie folgt:

| | |
|---|---|
| Saugkapazität in Bezug auf Öl (Maschinenöl): | 212 Gew.-% |
| Saugkapazität in Bezug auf Wasser [Wasseraufnahme]: | 7 Gew.-%. |

Die übrigen Materialparameter waren wie in Beispiel 3.

Daraus geht hervor, daß die erhaltenen Leichtbauplatten auf der Grundlage der faserverstärkten Calciumsilikatmasse nahezu ausschließlich Öl ab- beziehungsweise adsorbierten, also ihr Ab- beziehungsweise Adsorptionsverhalten nahezu völlig oleophil war. Daher eigneten sie sich als den bekannten Handelsprodukten ebenfalls überlegene Ab- beziehungsweise Adsorptionsmittel für Öle, beispielsweise wenn sie ausgelaufen sind.

Beispiel 8

Die Herstellung der verwendeten Leichtbauplatten auf der Grundlage einer faserverstärkten Calciumsilikatmasse erfolgte wie folgt:

Die Verfahrensweise des Beispiels 5 wurde mit dem Unterschied wiederholt, daß neben der im Beispiel verwendeten Wassermenge folgende Ausgangsstoffe verwendet wurden:

| | |
|---|---|
| 30,1 Gew.-% | Quarzmehl |
| 6,0 Gew.-% | amorphes Siliciumdioxidmaterial*) |
| 35,7 Gew.-% | Weißfeinkalk oder Kalkhydrat |
| 19,6 Gew.-% | Calciumsilikat**) |
| 0,5 Gew.-% | Bentonit |
| 8,0 Gew.-% | Cellulosefasern |
| 0,2 Gew.-% | zu 28% mit Essigsäure neutralisiertes Stearylamin in Form von 2,0 Gew.-% seiner 10%igen wäßrigen Dispersion. |

*) die entsprechende Bemerkung des Beispiels 1 gilt auch hier.
**) die entsprechende Bemerkung des Beispiels 1 gilt auch hier.

Die Ab- beziehungsweise Adsorptionsparameter der erhaltenen Leichtbauplatten auf der Grundlage der faserverstärkten Calciumsilikatmasse waren wie folgt:

| | |
|---|---|
| Saugkapazität in Bezug auf Öl (Maschinenöl): | 215 Gew.-% |
| Saugkapazität in Bezug auf Wasser [Wasseraufnahme]: | 1,5 Gew.-%. |

Die übrigen Materialparameter waren wie im Beispiel 3.

Daraus geht hervor, daß die erhaltenen Leichtbauplatten auf der Grundlage der faserverstärkten Calciumsilikatmasse nahezu ausschließlich Öl ab- beziehungsweise adsorbierten, also ihr Ab- beziehungsweise Adsorptionsverhalten nahezu völlig oleophil war. Daher eigneten sie sich als den bekannten Handelsprodukten ebenfalls überlegene Ab- beziehungsweise Adsorptionsmittel für Öle, beispielsweise wenn sie ausgelaufen sind.

## Patentansprüche

1. Verwendung von feuerbeständigen maßgenauen Leichtbauplatten mit einer Rohdichte von etwa 160 kg/m³ bis 800 kg/m³ auf der Grundlage von faserverstärkten Calciumsilikatmassen, welche durch Umsetzen von amorphem und kristallinem Siliciumdioxid beziehungsweise diese enthaltenden Materialien mit Calciumoxid beziehungsweise dieses enthaltenden Materialien in einem Molverhältnis von CaO zu $SiO_2$ von 0,8 : 1,1 : 1 unter Einarbeitung von toxikologisch unbedenklichen Faserstoffen in Gegenwart von Wasser und unter Entwässern erfolgendes Formen und Autoklavenhärten mit der weiteren Maßgabe, daß als weiterer Zusatz ein synthetisch hergestelltes Calciumsilikatgranulat beziehungsweise -pulver mit einem Molverhältnis von CaO zu $SiO_2$ von 0,8 : 1 bis 1,1 : 1 verwendet und die Umsetzung zum langsamen Aufbau einer Gelstruktur vor dem Formen (Vorreaktion) ohne äußere Wärmeanwendung durchgeführt worden ist, erhalten worden sind, gegebenenfalls in zerkleinerter und gegebenenfalls klassierter Form, als Ab- beziehungsweise Adsorptionsmittel für Flüssigkeiten, Dämpfe und Gase.

2. Verwendung nach Anspruch 1 zur hydrophilen Ab- beziehungsweise Adsorption.

3. Verwendung nach Anspruch 1 oder 2 als Tierstreu.

4. Verwendung nach Anspruch 1 zur oleophilen Ab- beziehungsweise Adsorption.

5. Verwendung nach Anspruch 1 bis 3, dadurch gekennzeichnet, daß man als, gegebenenfalls zerkleinerte, Leichtbauplatte auf der Grundlage einer faserverstärkten Calciumsilikatmasse eine solche einsetzt, für welche als synthetisches Calciumsilikatgranulat beziehungsweise -pulver ein solches verwendet worden ist, welches aus amorphem und/oder kristallinem Siliciumdioxid und Kalk, insbesondere Quarzmehl und Weißfeinkalk, zweckmäßig unter Zusatz von Mikroporenbildnern, durch Autoklavenhärtung hergestellt worden ist.

6. Verwendung nach Anspruch 1 bis 3 oder 5, dadurch gekennzeichnet, daß man als, gegebenenfalls zerkleinerte, Leichtbauplatte auf der Grundlage einer faserverstärkten Calciumsilikatmasse eine solche mit einem Gehalt an mindestens einem primären und/oder sekundären Fettamin als noch weiterem Zusatz einsetzt.

7. Verwendung nach Anspruch 1 bis 3, 5 oder 6, dadurch gekennzeichnet, daß man als, gegebenenfalls zerkleinerte, Leichtbauplatte auf der Grundlage einer faserverstärkten Calciumsilikatmasse eine solche einsetzt, welche als Fettamin(e) ein solches beziehungsweise solche, dessen beziehungsweise deren Alkylrest(e) 16 bis 20 beziehungsweise je 16 bis 20 Kohlenstoffatome aufweist beziehungsweise aufweisen.

8. Verwendung nach Anspruch 1 bis 5, dadurch gekennzeichnet, daß man als, gegebenenfalls zerkleinerte, Leichtbauplatte auf der Grundlage einer faserverstärkten Calciumsilikatmasse eine solche mit einem Gehalt an mindestens einem Polyamidwachs mit einem Schmelzpunkt von 170 bis 195°C, insbesondere 180 bis 190°C, und einem Zersetzungspunkt von mindestens 200°C als noch weiterem Zusatz einsetzt.

9. Verwendung nach Anspruch 1 bis 5 oder 8, dadurch gekennzeichnet, daß man als, gegebenenfalls zerkleinerte, Leichtbauplatte auf der Grundlage einer faserverstärkten Calciumsilikatmasse eine solche einsetzt, welche als Polyamidwachs(e) ein solches beziehungsweise solche von nicht amorpher Struktur in mikronisiertem Zustand enthält.

10. Verwendung nach Anspruch 1 bis 5, 8 oder 9, dadurch gekennzeichnet, daß man als, gegebenenfalls zerkleinerte, Leichtbauplatte auf der Grundlage einer faserverstärkten Calciumsilikatmasse eine solche einsetzt, welche als Polyamidwachs(e) ein Diamidwachs beziehungsweise Diamidwachse der allgemeinen Formel

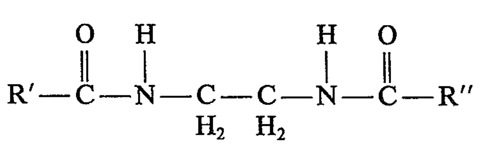

worin R′ und R″ für Alkylreste mit 12 bis 20, insbesondere 12 bis 18, Kohlenstoffatomen stehen, enthält.

11. Verwendung nach Anspruch 1 bis 5 oder 8 bis 10, dadurch gekennzeichnet, daß man als, gegebenenfalls zerkleinerte, Leichtbauplatte auf der Grundlage einer faserverstärkten Calciumsilikatmasse eine solche mit einem Gehalt an mindestens einem primären und/oder sekundären Fettaminsalz als noch weiterem Zusatz einsetzt.

12. Verwendung nach Anspruch 1 bis 5 oder 8 bis 11, dadurch gekennzeichnet, daß man als, gegebenenfalls zerkleinerte, Leichtbauplatte auf der Grundlage einer faserverstärkten Calciumsilikatmasse eine solche einsetzt, welche als Fettaminsalz(e) ein solches beziehungsweise solche, dessen beziehungsweise deren Alkylrest(e) 16 bis 20 beziehungsweise je 16 bis 20 Kohlenstoffatome aufweist beziehungsweise aufweisen.

13. Verwendung nach Anspruch 1 bis 5 oder 8 bis 12, dadurch gekennzeichnet, daß man als, gegebenenfalls zerkleinerte, Leichtbauplatte auf der Grundlage einer faserverstärkten Calciumsilikatmasse eine solche einsetzt, welche als Fettaminsalz(e) ein solches beziehungsweise solche mit einer organischen Carbonsäure beziehungsweise organischen Carbonsäuren mit 1 bis 11, insbesondere 2 bis 4, Kohlenstoffatomen enthält.

14. Verwendung nach Anspruch 1 bis 5 oder 8 bis 13, dadurch gekennzeichnet, daß man als, gegebenenfalls zerkleinerte, Leichtbauplatte auf der Grundlage einer faserverstärkten Calciumsilikatmasse eine solche einsetzt, welche als Fettaminsalz(e) ein solches beziehungsweise solche, bei welchem beziehungsweise welchen nur ein Teil, insbesondere 25 bis 30%, durch die Säure neutralisiert ist, enthält.

15. Verwendung nach Anspruch 1 bis 14, dadurch gekennzeichnet, daß man als, gegebenenfalls zerkleinerte, Leichtbauplatte auf der Grundlage einer faserverstärkten Calciumsilikatmasse eine solche einsetzt, in welche das Fettamin beziehungsweise die Fettamine oder das Polyamidwachs beziehungsweise die Polyamidwachse und/oder das Fettaminsalz beziehungsweise die Fettaminsalze durch Zugabe zur Herstellungsausgangsmischung vor deren Umsetzen eingebracht worden ist beziehungsweise sind.

16. Verwendung nach Anspruch 1 bis 7 oder 15, dadurch gekennzeichnet, daß man als, gegebenenfalls zerkleinerte, Leichtbauplatte auf der Grundlage einer faserverstärkten Calciumsilikatmasse eine solche einsetzt, bei welcher die Zugabe des Fettamins beziehungsweise der Fettamine zur Herstellungsausgangsmischung in einer Menge von 0,05 bis 0,5 Gew.-%, insbesondere 0,05 bis 0,3 Gew.-%, bezogen auf die eingesetzte Feststoffgemischmenge als Trockengewicht berechnet, erfolgt ist.

17. Verwendung nach Anspruch 1 bis 5 oder 8 bis 15, dadurch gekennzeichnet, daß man als, gegebenenfalls zerkleinerte, Leichtbauplatte auf der Grundlage einer faserverstärkten Calciumsilikatmasse eine solche einsetzt, bei welcher die Zugabe des Polyamidwachses beziehungsweise der Polyamidwachse zur Herstellungsausgangsmischung in einer Menge von 3 bis 7 Gew.-%, insbesondere 5 Gew.-%, bezogen auf die eingesetzte Feststoffgemischmenge als Trockengewicht berechnet, erfolgt ist.

18. Verwendung nach Anspruch 1 bis 5, 8 bis 15 oder 17, dadurch gekennzeichnet, daß man als, gegebenenfalls zerkleinerte, Leichtbauplatte auf der Grundlage einer faserverstärkten Calciumsilikatmasse eine solche einsetzt, bei welcher die Zugabe des Fettaminsalzes beziehungsweise der Fettaminsalze zur Herstellungsausgangsmischung in einer Menge von 0,05 bis 0,5 Gew.-%, insbesondere 0,05 bis 0,3 Gew.-%, bezogen auf die eingesetzte Feststoffgemischmenge als Trockengewicht berechnet, erfolgt ist.

19. Verwendung nach Anspruch 1, 4, 5, 8 bis 15, 17 oder 18, dadurch gekennzeichnet, daß man als, gegebenenfalls zerkleinerte, Leichtbauplatte auf der Grundlage einer faserverstärkten Calciumsilikatmasse eine solche einsetzt, welche nach ihrem Trocknen mit einem oder mehreren verseifungsbeständigen Alkylalkoxysilanen und/oder Phenylalkoxysilanen behandelt worden ist.

20. Verwendung nach Anspruch 1, 4, 5, 8 bis 15 oder 17 bis 19, dadurch gekennzeichnet, daß man als, gegebenenfalls zerkleinerte, Leichtbauplatte auf der Grundlage einer faserverstärkten Calciumsilikatmasse eine solche einsetzt, welche als Alkylalkoxysilan(e) ein solches beziehungsweise solche enthält, dessen beziehungsweise deren, gegebenenfalls verzweigter, Alkylteil 1 bis 6, insbesondere 3 bis 6, Kohlenstoffatome aufweist und dessen beziehungsweise deren, gegebenenfalls verzweigter, Alkoxyteil 1 bis 3 Kohlenstoffatome hat.

21. Verwendung nach Anspruch 1, 4, 5, 8 bis 15 oder 17 bis 20, dadurch gekennzeichnet, daß man als, gegebenenfalls zerkleinerte, Leichtbauplatte auf der Grundlage einer faserverstärkten Calciumsilikatmasse eine solche einsetzt, welche als Phenylalkoxysilan(e) ein solches beziehungsweise solche, dessen beziehungsweise deren, gegebenenfalls verzweigter, Alkoxyteil 1 bis 3 Kohlenstoffatome aufweist, enthält.

22. Verwendung nach Anspruch 1, 4, 5, 8 bis 15 oder 17 bis 21, dadurch gekennzeichnet, daß man als, gegebenenfalls zerkleinerte, Leichtbauplatte auf der Grundlage einer faserverstärkten Calciumsilikatmasse eine solche einsetzt, welche mit dem verseifungsbeständigen Alkylalkoxysilan und/oder Phenylalkoxysilan beziehungsweise den verseifungsbeständigen Alkylalkoxysilanen und/oder Phenylalkoxysilanen bis zur Aufnahme einer Menge von mindestens 0,5 Gew.-%, insbesondere 1,2 bis 1,6 Gew.-%, behandelt worden ist.

**Claims**

1. The use of fire-resistant, dimensionally accurate lightweight building elements, optionally crushed and optionally in a classified state, as an absorption or adsorption agent for liquids, vapours and gases, having a gross density of about 160 kg/m$^3$ to 800 kg/m$^3$, the elements being based on fibre-reinforced calcium silicate compositions which have been obtained by a reaction of amorphous and crystalline silica or materials containing it, with calcium oxide or materials containing it, in a molar ratio of CaO to $SiO_2$ of 0.8 : 1 to 1.1 : 1 with the addition of toxicologically harmless fibrous materials in the presence of water, and by shaping and hardening in an autoclave while dewatering, with the further measure that as an additional additive a synthetically produced calcium silicate granulate or powder having a molar ratio of CaO to $SiO_2$ of 0.8 : 1 to 1.1 : 1 is used, and for the slow development of a gel structure the reaction is carried out before the shaping (pre-reaction) without the application of external heat.

2. The use according to claim 1 for hydrophilic absorption of adsorption.

3. The use according to claim 1 or 2 as animal litter.

4. The use according to claim 1 for the oleophilic absorption or adsorption.

5. The use according to claims 1 to 3 characterised in that the optionally comminuted lightweight building element based on fibre-reinforced calcium silicate compositions used is one for which the synthetic calcium silicate granulate or powder used was produced from amorphous and/or crystalline silica and chalk, particularly quartz meal and fine fat lime, expediently under the addition of agents for forming micropores, by hardening in an autoclave.

6. The use according to claims 1 to 3 or 5 characterised in that the optionally comminuted lightweight building element based on fibre-reinforced calcium silicate compositions used is one which contains at least one primary and/or secondary fatty amine as further additive.

7. The use according to claims 1 to 3, 5 or 6 characterised in that the optionally comminuted lightweight building element based on fibre-reinforced calcium silicate compositions used is one which contains fatty amine(s) the alkyl portion(s) of which has or have 16—20 carbon atoms.

8. The use according to claims 1 to 5 characterised in that the optionally comminuted lightweight building element based on fibre-reinforced calcium silicate compositions used is one which contains at least one polyamine wax with a melting point of 170—195° C, particularly 180—190° C, and a decomposition point of at least 200° C, as still another additive.

9. The use according to claims 1 to 5 or 8 characterised in that the optionally comminuted lightweight building element based on fibrereinforced calcium silicate compositions used is one that uses as the polyamide wax or waxes a wax having a non-amorphous micro-structure.

10. The use according to claims 1 to 5, 8 and 9 characterised in that the optionally comminuted lightweight building element based on fibre-reinforced calcium silicate compositions used is one which contains as the polyamide wax or waxes a diamide wax or waxes of the general formula:

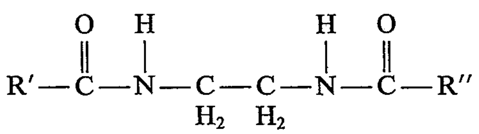

wherein R$^I$ and R$^{II}$ represent alkyl groups of 12—20, particularly 12—18, carbon atoms.

11. The use according to claims 1 to 3 or 8 to 10 characterised in that the optionally comminuted lightweight building element based on fibre-reinforced calcium silicate compositions used is one which contains at least one salt of a primary and/or secondary fatty amine as still another additive.

12. The use according to claims 1 or 5 or 8 to 11 characterised in that the optionally comminuted lightweight building element based on fibre-reinforced calcium silicate compositions used is one in which the fatty amine salt(s) used has or have alkyl group(s) containing 16—20 carbon atoms.

13. The use according to claims 1 to 5 or 8 to 12 characterised in that the optionally comminuted lightweight building element based on fibre-reinforced calcium silicate compositions used is one in which the fatty amine salt(s) used contain an organic carboxylic acid or acids having 1—11, particularly 2—4, carbon atoms.

14. The use according to claims 1 to 5 or 8 to 13 characterised in that the optionally comminuted lightweight building element based on fibre-reinforced calcium silicate compositions used is one in which the fatty amine(s) used is or are neutralized only partly, particularly to 25—30%, by the acid.

15. The use according to claims 1 to 14 characterised in that the optionally comminuted lightweight building elements based on fibre-reinforced calcium silicate compositions used is one in which the fatty amine or the fatty amines or the polyamide wax or the polyamide waxes and/or the fatty amine salt or the fatty amine salts is or are incorporated by adding it or them to the starting material for manufacture before its reaction.

16. The use according to claims 1 to 7 or 15 characterised in that the optionally comminuted lightweight building element based on fibre-reinforced calcium silicate compositions used is one wherein the amount of the fatty amine of fatty amines added to the starting mixture of manufacture is

0.05—0.5% by weight, particularly 0.05—0.3% by weight, calculated on the amount of the solid material mixed in as dry weight.

17. The use according to claims 1 to 5 or 8 to 15 characterised in that the optionally comminuted lightweight building element based on fibre-reinforced calcium silicate compositions used is one in which the amount of the polyamide wax or polyamide waxes added to the material for manufacture is 3—7 weight%, particularly 5 weight %, calculated on the dry weight of solid material used.

18. The use according to claims 1 to 5, 8 to 15 or 17 characterised in that the optionally comminuted lightweight building element based on fibre-reinforced calcium silicate compositions used is one in which the amount of the fatty amine salt or the fatty amine salts to the starting material added for production is 0.05 to 0.5 weight %, particularly 0.05—0.3 weight %, calculated on the dry weight of solid material used.

19. The use according to claims 1, 4, 5, 8, 15, 17 or 18 characterised in that the optionally comminuted lightweight building element based on fibre-reinforced calcium silicate compositions used is one which, after drying, is treated with one or more saponification-resistant alkyl alkoxysilane(s) and/or phenyl alkoxysilane(s).

20. The use according to claims 1, 4, 5, 8 to 15 or 7 or 19 characterised in that the optionally comminuted lightweight building element based on fibre-reinforced calcium silicate compositions used is one in which the alkyl alkoxysilane(s) used has or have an optionally branched alkyl group with 1—6, particularly 3—6, carbon atoms and the alkoxy group of which has 1—3 carbon atoms.

21. The use according to claim 1, 4, 5, 8 to 15 or 17 to 20 characterised in that the optionally comminuted lightweight building element based on fibre-reinforced calcium silicate compositions used is one in which the phenyl alkoxy silane(s) used has or have an optionally branched alkoxy group with 1—3 carbon atoms.

22. The use according to claim 1, 4, 5, 8 to 15 or 17 to 21 characterised in that the optionally comminuted lightweight building element based on fibre-reinforced calcium silicate compositions used is one which has been treated with the saponification-resistant alkyl alkoxy silane and/or phenyl alkoxy silane or the saponification-resistant alkyl alkoxy silanes and/or phenyl alkoxy silanes until a take-up of an amount of at least 0.5 weight %, particularly 1.2—1.6 weight % has been obtained.

**Revendications**

1. Utilisation de plaques de construction légères de dimensions précises réfractaires ayant une densité à l'état brut comprise environ entre 160 et 800 kg/m³ à base de compositions de silicate de calcium renforcées par des fibres, obtenues en faisant réagir de la silice amorphe et cristalline ou des matières les contenant avec de l'oxyde de calcium ou des matières le contenant, en respectant un rapport molaire $CaO/SiO_2$ compris entre 0,8/1 et 1,1/1 en incorporant des matières fibreuses irréprochables au point de vue toxicologique en présence d'eau, en mettant en forme en déshydratant simultanément et en faisant durcir dans un autoclave et, selon une mesure complémentaire, en ajoutant en outre comme additif complémentaire du silicate de calcium en granules ou en poudre fabriqué par synthèse, dans lequel le CaO et le $SiO_2$ sont présents dans un rapport molaire compris entre 0,8/1 et 1,1/1, et en effectuant la réaction pour la formation lente d'une structure de gel avant le moulage (réaction préalable) sans apport thermique de l'extérieur, comme agents absorbants ou adsorbants pour liquides, vapeurs et gaz, éventuellement sous forme concassée et éventuellement après classification.

2. Utilisation selon la revendication 1 pour l'absorption ou l'adsorption hydrophile.

3. Utilisation selon la revendication 1 ou 2 comme litière pour animaux.

4. Utilisation selon la revendication 1 pour l'absorption ou l'adsorption oléophile.

5. Utilisation selon les revendications 1 à 3 caractérisée en ce que l'on emploie comme plaque de construction légère, éventuellement concassée, à base d'une composition de silicate de calcium renforcée par des fibres, une plaque contenant un silicate de calcium en granules ou en poudre obtenu à partir de silice amorphe et/ou cristalline et de chaux, en particulier à partir de farine de quartz et de chaux fine blanche, opportunément avec addition de formateurs de micropores, par durcissement dans un autoclave.

6. Utilisation selon les revendications 1 à 3 ou 5, caractérisée en ce que l'on emploie comme plaque de construction légère, éventuellement concassée, à base d'une composition de silicate de calcium renforcée par des fibres, une plaque ayant une teneur en au moins une amine grasse primaire et/ou secondaire en tant qu'additif complémentaire.

7. Utilisation selon les revendications 1 à 3, 5 ou 6 caractérisée en ce que l'on emploie comme plaque de construction légère, éventuellement concassée, à base d'une composition de silicate de calcium renforcée par des fibres, une plaque dans laquelle l'amine grasse, ou les amines grasses, possèdent chacune un reste alkyle ayant 16 à 20 atomes de carbone.

8. Utilisation selon les revendications 1 à 5, caractérisée en ce que l'on emploie comme plaque de construction légère, éventuellement concassée, à base d'une composition de silicate de calcium renforcée par des fibres, une plaque ayant une teneur en au moins une cire de polyamide dont le point

de fusion est compris entre 170 et 195°C, en particulier entre 180 et 190°C, et un point de décomposition d'au moins 200° C en tant qu'autre additif complémentaire.

9. Utilisation selon les revendications 1 à 5 ou 8, caractérisée en ce que l'on emploie comme plaque de construction légère, éventuellement concassée, à base d'une composition de silicate de calcium renforcée par des fibres, une plaque contenant de la cire de polyamide de structure non amorphe à l'état micronisé.

10. Utilisation selon les revendications 1 à 5, 8 ou 9 caractérisée en ce que l'on emploie comme plaque de construction légère éventuellement concassée, à base d'une composition de silicate de calcium renforcée par des fibres, une plaque contenant comme cire de polyamide, au moins une cire de diamide de formule générale:

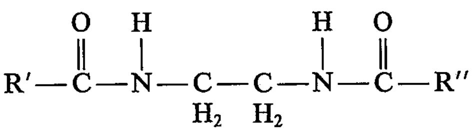

dans laquelle R' et R'' désignent des reste alkyle ayant 12 à 20, en particulier 12 à 18 atomes de carbone.

11. Utilisation selon les revendications 1 à 5 ou 8 à 10, caractérisée en ce que l'on emploie comme plaque de construction légère, éventuellement concassée, à base d'une composition de silicate de calcium renforcée par des fibres, une plaque ayant une teneur en au moins un sel d'amine grasse primaire et/ou secondaire en tant qu'autre additif complémentaire.

12. Utilisation selon les revendications 1 à 5 ou 8 à 11, caractérisée en ce que l'on emploie comme plaque de construction légère, éventuellement concassée, à base d'une composition de silicate de calcium renforcée par des fibres, une plaque dans laquelle le sel ou les sels d'amine grasse possèdent chacun un reste alkyle ayant 16 à 20 atome atomes de carbone.

13. Utilisation selon les revendications 1 à 5 ou 8 à 12 caractérisée en ce que l'on emploie comme plaque de construction légère, éventuellement concassée, à base d'une composition de silicate de calcium renforcée par des fibres, une plaque dans laquelle le sel ou les sels d'amine grasse sont formés avec un acide carboxylique organique ayant 1 à 11, en particulier 2 à 4 atomes de carbone.

14. Utilisation selon les revendications 1 à 5 ou 8 à 13, caractérisée en ce que l'on emploie comme plaque de construction légère, éventuellement concassée, à base d'une composition de silicate de calcium renforcée par des fibres, une plaque dans laquelle le sel ou les sels d'amine grasse ne sont que partiellement, en particulier pour une fraction comprise entre 25 et 30%, neutralisés par l'acide.

15. Utilisation selon les revendications 1 à 14, caractérisée en ce que l'on emploie comme plaque de construction légère, éventuellement concassée, à base d'une composition de silicate de calcium renforcée par des fibres, une plaque dans laquelle l'amine grasse ou les amines grasses ou la cire de polyamide ou les cires de polyamide et/ou le sel ou les sels d'amine grasse ont été ajoutés au mélange de départ pour la fabrication avant la réaction de celui-ci.

16. Utilisation selon les revendications 1 à 7 ou 15, caractérisée en ce que l'on emploie comme plaque de construction légère, éventuellement concasssée, à base d'une composition de silicate de calcium renforcée par des fibres, une plaque pour laquelle l'addition de l'amine grasse ou des amines grasses au mélange de départ pour la fabrication, a été effectuée en une quantité comprise entre 0,05 et 0,5% en poids, en particulier entre 0,05 et 0,3% en poids, calculé sous la forme de poids sec, par rapport à la quantité de mélange de matières solides mise en œuvre.

17. Utilisation selon les revendications 1 à 5, ou 8 à 15, caractérisée en ce que l'on emploie comme plaque de construction légère, éventuellement concassée, à base d'une composition de silicate de calcium renforcée par des fibres, une plaque pour laquelle l'addition de la cire de polyamide ou des cires de polyamide au mélange de départ pour la fabrication a été effectuée en une quantité comprise entre 3 et 7% en poids, en particulier de 5% en poids, calculée sous la forme de poids sec par rapport à la quantité de mélange de matières solides mise œuvre.

18. Utilisation selon les revendications 1 à 5, 8 à 15 ou 17 caractérisée en ce que l'on emploie comme plaque de construction légère, éventuellement concassée, à base d'une composition de silicate de calcium renforcée par des fibres, une plaque pour laquelle l'addition du sel ou des sels d'amine grasse au mélange de départ pour la fabrication a été effectuée en une quantité comprise entre 0,05 et 0,5% en poids, en particulier entre 0,05 et 0,3% en poids calculée sous la forme de poids sec par rapport à la quantité de mélange de matières solides mise on œuvre.

19. Utilisation selon les revendications 1, 4, 5, 8 à 15, 17 ou 18, caractérisée en ce que l'on emploie comme plaque de construction légère, éventuellement concassée, à base d'une composition de silicate de calcium renforcée par des fibres, une plaque qui a été traitée après son séchage par un ou plusieurs alkylalcoxysilanes et/ou phénylalcoxysilanes résistant à la saponification.

20. Utilisation selon les revendications 1, 4, 5, 8 à 15 ou 17 à 19, caractérisée en ce que l'on emploie comme plaque de construction légère, éventuellement concassée, à base d'une composition de silicate de calcium, une plaque contenant un ou plusieurs alkylalcoxysilanes dont la fraction alkyle, éventuellement ramifiée contient 1 à 6, en particulier 3 à 6, atomes de carbone, et dont la fraction alcoxy, éventuellement ramifiée contient 1 à 3 atomes de carbone.

21. Utilisation selon les revendications 1, 4, 5, 8 à 15 ou 17 à 20, caractérisée en ce que l'on emploie comme plaque de construction légère, éventuellement concassée, à base d'une composition de silicate de calcium, une plaque contenant un ou plusieurs phénylalcoxysilanes dont la fraction alcoxy, éventuellement ramifiée, contient 1 à 3 atomes de carbone.

22. Utilisation selon les revendications 1, 4, 5, 8 à 15 ou 17 à 21, caractérisée en ce que l'on emploie comme plaque de construction légère, éventuellement concassée, à base d'une composition de silicate de calcium, une plaque ayant été traitée par l'alkylalcoxysilane et/ou le phénylalcoxysilane résistant à la saponification ou par les alkylalcoxysilanes et/ou les phénylalcoxysilanes résistant à la saponification, jusqu'à l'absorption d'une quantité d'au moins 0,5% en poids, en particulier comprise entre 1, 2 et 1,6% en poids.

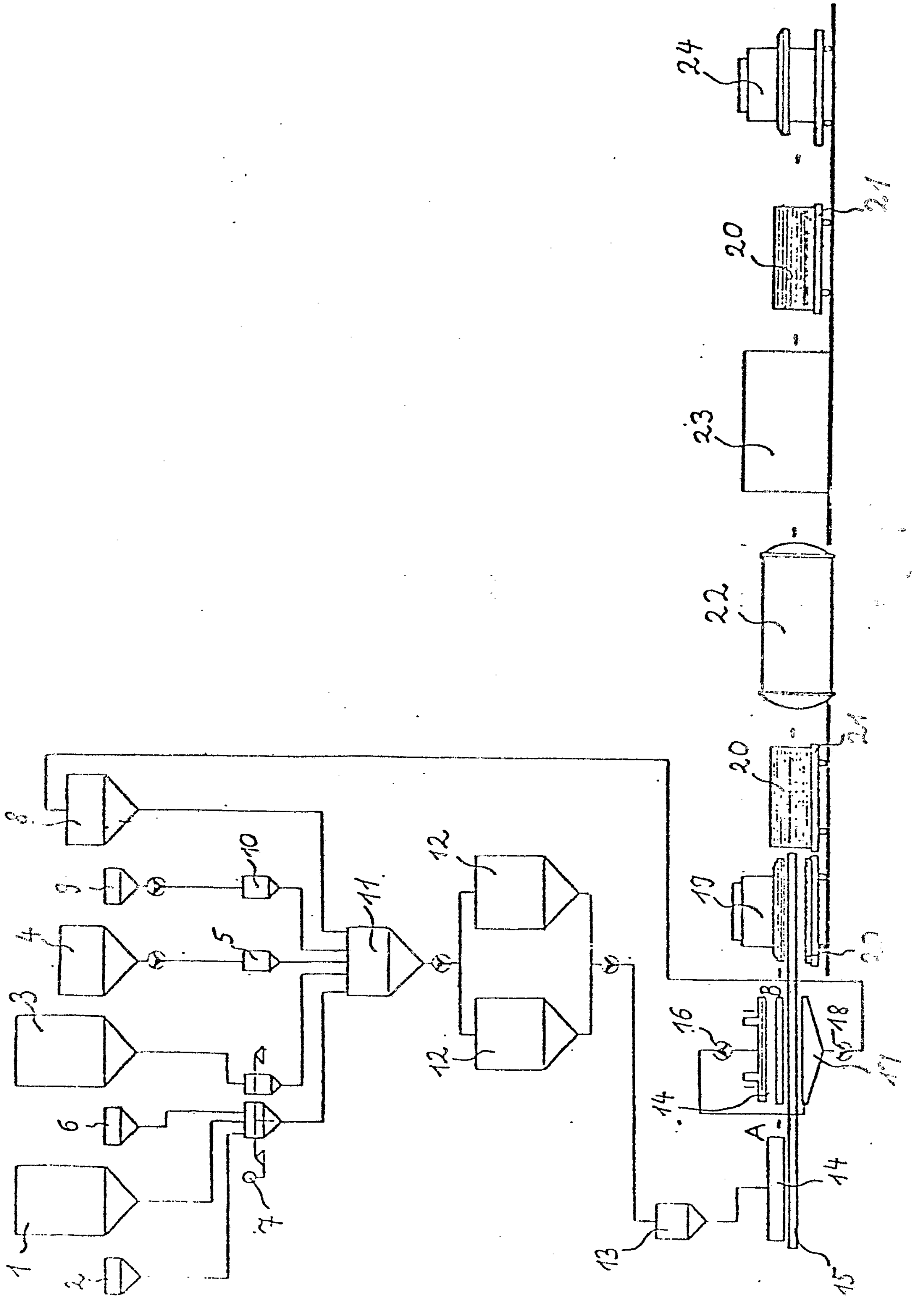

1
2
3
4
5
6
7
8
9
10
11
12
12
13
14
14
15
16
17
18
19
20
20
21
21
22
23
24
A
B

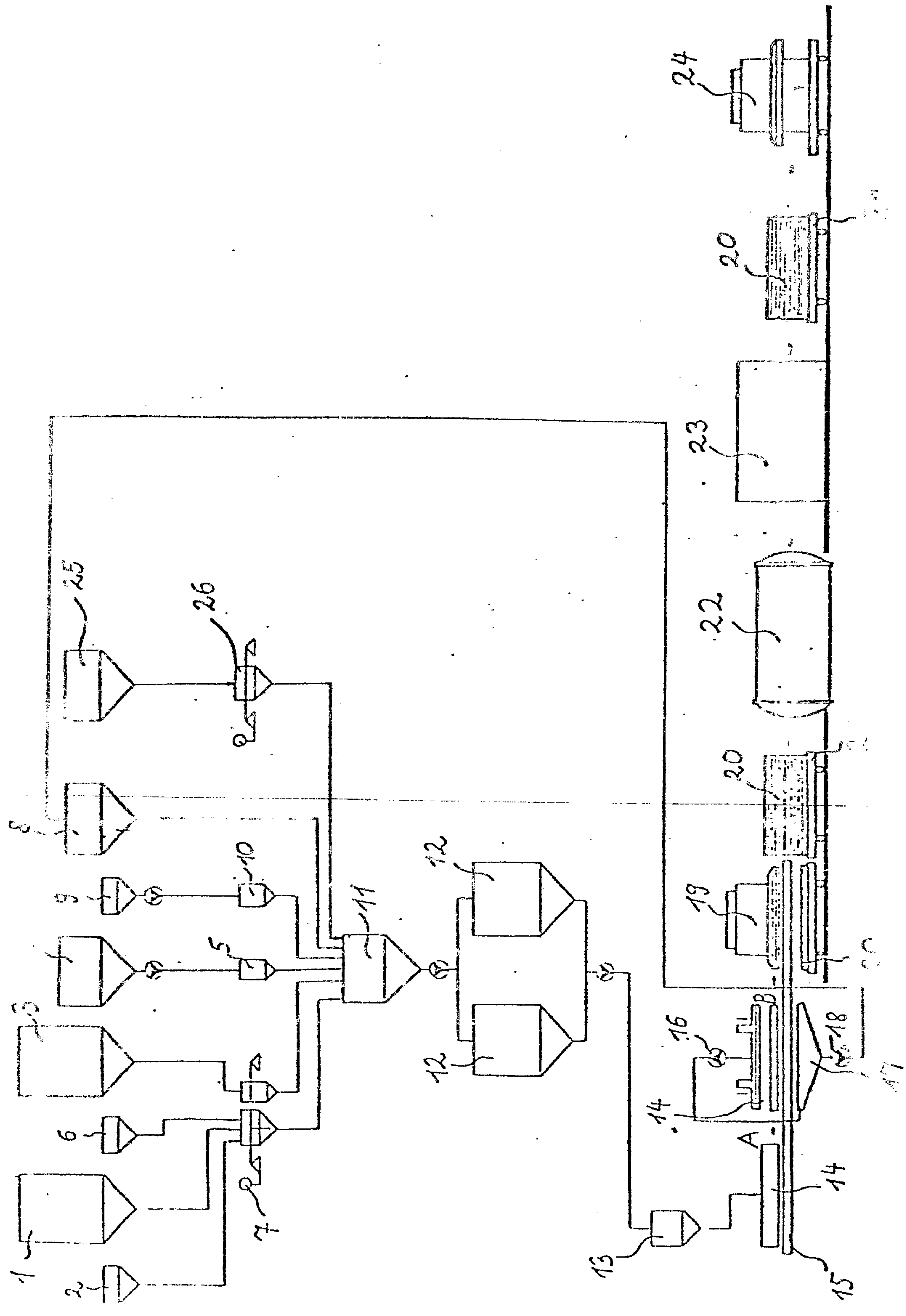

1
2
3
4
5
6
7
8
9
10
11
12
12
13
14
14
15
16
18
19
20
20
22
23
24
25
26
A
B

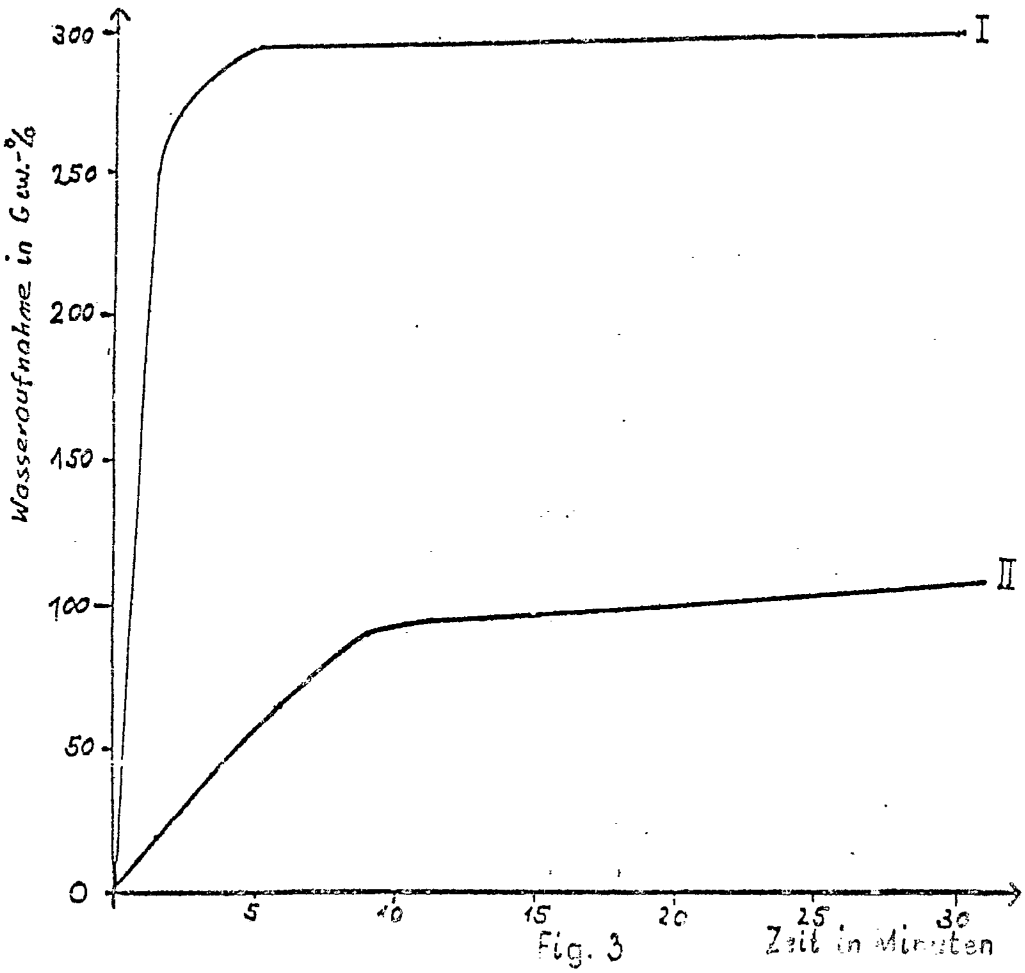
Wasseraufnahme in Gew.-%
300
250
200
150
100
50
0
5
10
15
20
25
30
I
II
Zeit in Minuten

Fig. 3